(19) Europäisches Patentamt
European Patent Office
Office européen des brevets

(11) **EP 3 708 357 B1**

(12) **EUROPÄISCHE PATENTSCHRIFT**

(45) Veröffentlichungstag und Bekanntmachung des Hinweises auf die Patenterteilung:
**02.07.2025 Patentblatt 2025/27**

(21) Anmeldenummer: **19163235.5**

(22) Anmeldetag: **15.03.2019**

(51) Internationale Patentklassifikation (IPC):
*B32B 5/02* (2006.01)　　*B32B 5/14* (2006.01)
*B32B 5/26* (2006.01)　　*B32B 7/02* (2019.01)
*B32B 7/04* (2019.01)　　*D04H 1/4258* (2012.01)
*D04H 3/013* (2012.01)　　*E02D 17/00* (2006.01)
*E02D 17/20* (2006.01)　　*E02D 19/00* (2006.01)
*E02D 31/00* (2006.01)

(52) Gemeinsame Patentklassifikation (CPC):
**B32B 5/26; B32B 5/02; B32B 5/14; B32B 7/02; B32B 7/04; D04H 1/4374;** B32B 2262/04; B32B 2307/50; B32B 2307/7163; E02D 17/00

(54) **GEOMATERIALBAHN MIT BIOLOGISCHEN ABBAUEIGENSCHAFTEN**

GEOMATERIAL STRIP WITH BIOLOGICAL DEGRADATION CHARACTERISTICS

BANDE DE MATIÈRE GÉOLOGIQUE À PROPRIÉTÉS DE BIODÉGRADATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.09.2020 Patentblatt 2020/38**

(73) Patentinhaber: **Naue GmbH & Co. KG**
**32339 Espelkamp-Fiestel (DE)**

(72) Erfinder:
• **Ehrenberg, Henning**
**32339 Espelkamp-Fiestel (DE)**
• **Vollmert, Lars**
**32339 Espelkamp-Fiestel (DE)**
• **Hoyme, Helge**
**32339 Espelkamp-Fiestel (DE)**
• **Vissing, Norbert**
**32339 Espelkamp-Fiestel (DE)**
• **Tazl, Martin**
**32339 Espelkamp-Fiestel (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
**EP-A1- 3 385 426　　US-A1- 2009 317 583**

• DATABASE WPI Week 200758, Derwent World Patents Index; AN 2007-609906, XP002793991
• DATABASE WPI Week 201578, Derwent World Patents Index; AN 2015-701490, XP002793992

**Beschreibung**

Die Erfindung betrifft eine Geomaterialbahn, ein Verfahren zur Bodenstabilisierung mittels einer Geomaterialbahn und eine Verwendung einer Geomaterialbahn zur Bodenstabilisierung.

Geomaterialbahnen, auch genannt Geotextilien (oder klassisch Geokunststoffe), werden in vielfältiger Weise dazu eingesetzt, um Bodenschichten zu stabilisieren. Solche unterschiedlichen Einsatzmöglichkeiten von Geomaterialbahnen liegen in der Böschungsbefestigung, dem Deichbau, dem Uferschutz an Flüssen und Seen, der Stabilisierung von Böschungen im Deponiebereich oder der Stabilisierung von Fahrbahntrassen für Straßen und im Gleisbau als typische Beispiele. Geomaterialbahnen werden hierbei in der Regel in einer vorbestimmten Tiefe eingebaut, sind also von Bodenschichten bedeckt, können aber in Einzelfällen auch oberflächlich eingebaut werden.

Die Geomaterialbahn übernimmt hierbei die Aufgabe, die Bodenschicht und Schichtgrenzen zwischen Böden zu stabilisieren, das heißt Erosion oder Bodenumlagerung und Vermischung zu verhindern, Bodenmaterialverbringung, wie beispielsweise durch strömungsbedingten Abtrag und Wiederanlagerung von Bodenmaterial zu unterbinden oder zu verringern und ein insgesamtes Abrutschen von Bodenschichten zu verhindern. Geomaterialbahnen können hierbei als dauerhafte Lösung eingesetzt werden, insbesondere dort, wo durch natürliche Prozesse wie Durchwurzelung oder sonstige Bodenverfestigungsmechanismen keine Stabilisierung der Bodenschicht oder der Schichtgrenzen zu erreichen ist. In vielen Anwendungen werden Geomaterialbahnen verbaut, um einen übergangsweisen, zeitlich begrenzten mechanischen Stabilisierungseffekt zu erzielen, der die Bodenschicht soweit stabilisiert, dass ein Wachstum von Pflanzen erreicht wird und eine zusätzliche Stabilisierung der Bodenschicht durch eine Durchwurzelung mittels dieser wachsenden Pflanzen langfristig erzielt werden kann. Eine Geomaterialbahn in der Anwendung als Bewehrungsmatte ist aus EP 2 439 342 A1 bekannt.

Ein Problem im Zusammenhang mit solchen Geomaterialbahnen liegt darin, dass der in den Boden eingebrachte künstliche Stoff ein potentielles Umweltrisiko darstellt, wobei dieses Umweltrisiko am Einbauort selbst oder, wenn durch mechanische Einflüsse oder andere Einwirkungen die Geomaterialbahn in kleinere Abschnitte zertrennt wird und vom Einbauort weg gelangt, an anderen Orten auftritt. Um diese Nachteile zu überwinden, ist generell vorgeschlagen worden, Geomaterialbahnen aus biologisch abbaubaren Materialien herzustellen. Aus DE 295 16 797 U1 ist beispielsweise eine Abdeckschicht aus einem Material vorbekannt, wobei das Material aus Naturfaser bestehen kann. Aus US 2013/0344759 A1 ist ein Geotextil mit einer nicht gewebten Struktur vorbekannt, bei dem Pflanzenfasern zur Herstellung eingesetzt werden. Hierzu wird, als Ersatz für vorbekannte Jute- oder Kokosnussfasern, Hanffasern vorgeschlagen.

Nachteilig an den so vorgeschlagenen, biologisch abbaubaren Geotextilien ist jedoch, dass die gewünschte mechanische Bodenstabilisierung in vielen Anwendungen nicht über den erforderlichen Zeitraum gewährleistet wird, durch den biologischen Abbau die mechanische Schutzwirkung verloren geht und es zu unerwünschten Bodenbewegungen wie Hangabrutschen, Deichschäden und dergleichen kommen kann. Zwar wird zur Vermeidung dieser Probleme eine Faserbeschichtung vorgeschlagen, dies läuft jedoch dem eigentlichen Ziel, eine biologische Abbaubarkeit zu erreichen, entgegen und erzeugt ein Umweltrisiko ausgehend von der Beschichtung. Der Einsatz biologisch abbaubarer Geotextilien aus den o.g. vorbekannten Naturfasern kann daher in vielen Anwendungen keine zufriedenstellenden Ergebnisse bringen oder versagt hinsichtlich der zeitlichen Anforderungen an die mechanische Befestigungswirkung. Für Geokunststoffe gibt die DIN EN 12225 daher Prüfkriterien an, um eine allgemeine Beständigkeit gegen mikrobiellen Abbau nachzuweisen.

Aus EP3385426A1 ist ein ungerichtetes Zellulosefasermaterial vorbekannt, das aus einer Lyocell - Lösung direkt hergestellt ist. Dieser Stand der technik beschreibt den Einsatz eines ungerichteten Zellulosefasermaterials zur Herstellung von Geotextilien, die als saatschutzabdeckung, Kapillarmatte, zur Wasserreinigung, zur Bewässerungssteuerung, als Asphaltauflage, zur Bodenstabilisierung, Drainage, oder zur Sedimentations- und Erosionskontrolle hergestellt werden.

Aus US2009/0317583A1 ist eine Dichtungsmembran vorbekannt, die aus feuchtigkeitsabsorbierenden Fasern, die bei Feuchtigkeitsaufnahme anschwellen, hergestellt ist. Als Beispiel werden hierzu Lyocellfasern beschrieben.

JP2007217973A beschreibt ein Verfahren zum Verhindern des Ablaufens der Mutterbodenschicht, bei dem eine wasserabsorbierende und belüftende Lage auf den Boden aufgelegt wird.

JP2015200107A beschreibt eine wasserdichte Folie, die auf einer Untergrundoberfläche installiert werden kann. Die Folie umfasst eine Textillage und eine Harzlage auf beiden Oberflächen aufweist.

Es ist daher Aufgabe der Erfindung, eine Geomaterialbahn, ein Verfahren zur Stabilisierung von Bodenschichten mit einer Geomaterialbahn und Verwendungen von Geomaterialbahnen zur Stabilisierung von Bodenschichten vorzuschlagen, welche eine zuverlässige mechanische Stabilisierung über den notwendigen Einsatzzeitraum gewährleisten, zugleich aber die Umweltbelastung reduzieren.

Diese Aufgabe wird erfindungsgemäß gelöst gemäß einem ersten Aspekt der Erfindung durch eine Geomaterialbahn nach Anspruch 1

Gemäß der Erfindung wird eine Geomaterialbahn vorgeschlagen, die aus einem ersten und zweiten Strukturmaterial besteht oder ein solches erstes Strukturmaterial und zweites Strukturmaterial umfasst. Das erste und das zweite Strukturmaterial sind zu einer flächigen Materialverbundbahn miteinander verbunden, also zu einem Geotextil, einer Matte oder dergleichen. Diese Verbindung kann durch Weben, Wirken, Stricken, Vliesverarbeitung oder andere, systematisch das erste und zweite Strukturmaterial miteinander verbindende Verfahren erfolgen. Das erste und das zweite Strukturmaterial können bevorzugt Fasermaterialien sein, wobei hierunter Kurzfasern, Langfasern, Garne, Endlosfasern und dergleichen verstanden werden soll. Die Verbindung zwischen dem ersten und zweiten Strukturmaterial kann auch nach Art eines nicht gewebten ("nonwoven") Materials ausgeführt sein, indem durch eine zufällige Ausrichtung von Fasern Verschlingungs- und Verhakungseffekte der Fasern untereinander erzielt werden.

Erfindungsgemäß handelt es sich bei dem ersten Strukturmaterial um ein organisches Strukturmaterial, also beispielsweise Holz, Holzwerkstoffe oder Kunststoffe. Das zweite Strukturmaterial kann entweder ein organisches oder ein anorganisches Material sein. Die Funktionalität und Wirkung der Geomaterialbahn wird durch das Zusammenwirken der beiden Strukturmaterialien erreicht.

Sowohl das erste als auch das zweite Strukturmaterial weisen eine biologische Abbaubarkeit auf. Die biologische Abbaubarkeit ist dabei erfindungsgemäß definiert nach dem Prinzip der Norm ISO 16929 oder nach einem durch den TÜV Österreich Belgien entwickelten marinen Degradationstest. Das erfindungsgemäße Material muss zumindest eine dieser beiden Bedingungen erfüllen, vorzugsweise beide.

Nach ISO16929 ist eine Kompostierbarkeit eines Materials nachgewiesen, wenn es drei Kriterien erfüllt. Eines dieser Kriterien ist so definiert, dass nach 84 Tagen in einer kontrollierten Kompostierung nicht mehr als 10 Gew.-% des Materials in einem Sieb von 2mm verbleiben, wenn das Material bzw. seine Bestandteile gesiebt werden. Angelehnt an diese Systematik und adaptiert auf die Bedürfnisse von Geomaterialien weist das erste Strukturmaterial eine erste Biodegradierbarkeit auf, bei der innerhalb von sechs Monaten in der kontrollierten Kompostierung gemäß ISO 16929 unter thermophilen Kompostierungsbedingungen nicht mehr als 50 Gew.-% der Trockenmasse des ersten Strukturmaterials nach einer Siebung durch ein 2mm-Sieb im Sieb verbleibt. Das erste Material qualifiziert sich daher nicht notwendigerweise als kompostierbar im Sinne der ISO16929. Es kann aber kompostierbar sein oder es kann über einen längeren Zeitraum als sechs Monate die Degradation der 90 Gew.-% Partikel <2mm erreichen.

Der Degradationstest unter marinen Bedingungen simuliert den Abbau genormter Proben unter einer beschleunigten Simulation in Meereswasser. Auch hier wird der Abbaugrad durch eine finale Siebung anhand des im Sieb verbleibenden Trockengewichts ermittelt. Die intensivere Beweglichkeit des Materials wird aber durch zwei Zwischensiebungen nach 4 und 8 Wochen simuliert.

Beide Degradationstests werden mit Probekörpern mit definierten Abmessungen vorgenommen. Länge und Breite sind dabei definiert, die Stärke orientiert sich am Originalmaterial, also der Stärke des Materials in der produzierten Bauweise. Dies kann bei Schichtverbunden, in denen das erste und das zweite Strukturmaterial in voneinander separaten, aufeinander liegenden Schichtlagen angeordnet und miteinander verbunden sind die Stärke des Materials in der jeweiligen Schichtlage sein. Wird das Originalmaterial als Verbundschicht, wie beispielsweise als Vlies oder als eine aus zwei unterschiedlichen Fasern gewebten, gewirkten oder in anderer Weise verbundenen Schichtlage produziert, so ist für die Zwecke des Degradationstest eine Probe des Materials in der originalen Materialstärke der Schichtlage zu verwenden, die nur aus dem zu untersuchenden Material hergestellt ist.

Gegenüber dem ersten Strukturmaterial weist das zweite Strukturmaterial eine zweite biologische Abbaubarkeit auf, die anders, insbesondere geringer ist als diejenige des ersten Strukturmaterials, das heißt, nach sechs Monaten bzw. zwölf Wochen verbleibt ein zweiter Gewichtsprozent-Anteil des zweiten Strukturmaterials im 2mm-Sieb, der unterschiedlich, insbesondere höher als derjenige des ersten Strukturmaterials ist. Wenn also beispielsweise in dem Kompostierungstest innerhalb von sechs Monaten 70 Gew.-% des ersten Strukturmaterials in Partikel <2mm abgebaut ist, kann im gleichen Zeitraum unter denselben Bedingungen ein Gewichtsprozent-Anteil von 60 % des zweiten Strukturmaterials in Partikel <2mm abgebaut sein.

Mit der Erfindung wird folglich eine Geomaterialbahn bereitgestellt, welche durch den biologischen Abbau in definierter Weise eine Materialumwandlung in Kohlendioxid erfährt, wobei eines der beiden Strukturmaterialien, welche in der Geomaterialbahn umfasst sind oder aus der die Geomaterialbahn aufgebaut ist, schneller biologisch abgebaut wird als das andere. Hierdurch können sowohl geometrische als auch mechanische Eigenschaften der Geomaterialbahn gezielt durch den biologischen Abbau beeinflusst werden. Beispielsweise kann durch den rascheren Abbau des ersten Strukturmaterials in der Geomaterialbahn eine Ausbildung von Öffnungen oder Poren erzielt werden, die für einen Durchwurzelungsprozess vorteilhaft sind, indem die mit zunehmender Durchwurzelung auftretende erhöhte Raumforderung der Pflanzenwurzeln durch den biologischen Abbau des ersten Strukturmaterials bereitgestellt wird, zugleich aber die noch notwendige mechanische Stabilisierung durch das zweite Strukturmaterial erhalten bleibt. Weiterhin kann beispielsweise bei Geweben oder Gewirken oder Vliesstoffen oder Verbundstoffen aus dem ersten und zweiten Strukturmaterial eine mechanische Eigenschaft in einer ersten Richtung, in der im Wesentlichen das erste Strukturmaterial in der Geomaterialbahn verläuft, stärker verringert werden als eine mechanische Eigenschaft in einer hiervon abweichenden zweiten Richtung, in welcher im Wesentlichen das zweite Strukturmaterial in der Geomaterialbahn verläuft. So kann beispielsweise bei einer Böschungsbefestigung eine Stabilität quer zur Hangrichtung rascher abgebaut werden als eine Stabilität in Hangrichtung, wodurch eine für das Pflanzenwachstum gewünschte leichte Beweglichkeit der Geomaterialbahn erzielt wird, zugleich aber ein Abrutschen in Hangrichtung verhindert wird.

Grundsätzlich können neben der Beeinflussung der geometrischen und mechanischen Eigenschaften durch spezifische Anordnung des ersten und des zweiten Strukturmaterials in der Geomaterialbahn auch durch Auswahl und Anteilsverhältnisse des ersten und des zweiten Strukturmaterials die mechanischen Eigenschaften über den Abbauzeitraum der Geomaterialbahn insgesamt beeinflusst werden. Dies ermöglicht in vorteilhafter Weise, dass die biologische Abbaugeschwindigkeit und Verringerung der mechanischen/geometrischen Eigenschaften an örtliche Begebenheiten am Einbauort der Geomaterialbahn angepasst werden kann. Während die normierte biologische Abbaubarkeit unter normierten Bedingungen bestimmt wird, können am Einbauort unterschiedliche Einflussparameter für die biologische Abbaubarkeit vorherrschen. So kann beispielsweise ein erhöhter Sauerstoffgehalt zu einem schnelleren biologischen Abbau führen und umgekehrt ein reduzierter Sauerstoffgehalt zu einem langsameren biologischen Abbau. Des Weiteren können Einflussfaktoren wie erhöhte UV-Strahlung, ein hoher oder niedriger pH-Wert, ein erhöhtes Nährstoffangebot, ein erhöhter Anteil an Bakterien, ein erhöhter Anteil an Pilzen und andere Faktoren die biologische Abbaugeschwindigkeit beeinflussen. Durch die Möglichkeit, bei der erfindungsgemäßen Geomaterialbahn das Mischungsverhältnis des ersten und des zweiten Strukturmaterials zu verändern, kann folglich beispielsweise dann, wenn durch lokale Einflussfaktoren am Einbauort mit einer erhöhten biologischen Abbaugeschwindigkeit zu rechnen ist, der Anteil des zweiten Strukturmaterials erhöht werden oder umgekehrt, wenn mit Einflussfaktoren, die die biologische Abbaugeschwindigkeit reduzieren am Einbauort zu rechnen ist, durch Erhöhung des Anteils des ersten Strukturmaterials diesem begegnet werden, um auf diese Weise eine an die örtlichen Gegebenheiten angepasste Geomaterialbahn mit einer maßgeschneiderten biologischen Abbaugeschwindigkeit zu erhalten.

Bevorzugt ist vorgesehen, dass die erste biologische Abbaubarkeit größer ist als die zweite biologische Abbaubarkeit. Gemäß dieser Ausführungsform weist das zweite Strukturmaterial eine geringere biologische Abbaubarkeit auf als das erste Strukturmaterial, das heißt, das zweite Strukturmaterial baut sich langsamer ab als das erste Strukturmaterial. Grundsätzlich kann beispielsweise das erste Strukturmaterial eine Abbaubarkeit aufweisen, bei der nach sechs Monaten bzw. zwölf Wochen mind. 90 Gew.-% des ersten Strukturmaterials zu Partikeln kleiner 2mm abgebaut ist, wohingegen es beim zweiten Strukturmaterial nur 80 Gew.-% oder weniger sind. Dies bedeutet, dass bei dem ersten Material weniger als 10 Gew.-% des Materials im 2mm-Sieb verbleiben, wohingegen es beim zweiten Material mehr als 20 Gew.-% sind. Bevorzugt weist das zweite Strukturmaterial eine biologische Abbaubarkeit auf, bei der nach sechs Monaten weniger als 50 % zu Partikeln kleiner 2mm abgebaut ist.

Erfindungsgemäß ist das erste Strukturmaterial in der Geomaterialbahn so angeordnet, dass nach teilweisem oder vollständigem biologischem Abbau des ersten Strukturmaterials in der Geomaterialbahn die Geomaterialbahn durchsetzende Öffnungen ausgebildet sind. Demgemäß verändert sich durch den schnelleren Abbau des ersten Strukturmaterials die geometrische Erscheinung der Geomaterialbahn, indem die Geomaterialbahn durchsetzende Öffnungen entstehen. Das erste Strukturmaterial ist folglich in der Geomaterialbahn so angeordnet, dass es im Ausgangszustand diese Öffnungen verschließt und durch seinen Abbau diese Öffnungen freigibt bzw. diese Öffnungen entstehen. Die Geomaterialbahn wird hierdurch perforiert bzw. in stärkerem Maße perforiert und passt sich folglich einem Durchwurzelungsprozess an, der mit zunehmender Durchwurzelung einerseits mehr Durchlässigkeit der Geomaterialbahn erforderlich macht, andererseits auch eine geringere mechanische Festigkeit der Geomaterialbahn erfordert. Die gewünschte Wirkung mit einer Ausbildung von Öffnungen durch Abbau des ersten Strukturmaterials lässt sich beispielsweise erreichen, indem das erste und zweite Strukturmaterial zu einem Vliesstoff miteinander verarbeitet wird.

Es ist weiter bevorzugt, dass das erste Strukturmaterial das zweite Strukturmaterial teilweise oder vollständig durchdringt. Mittels einer solchen Durchdringung kann einerseits eine bestimmte, gerichtete oder ungerichtete mechanische Destabilisierung der Geomaterialbahn durch den biologischen Abbau des ersten Strukturmaterials erreicht werden. Zum anderen können bestimmte gerichtete oder ungerichtete Kanäle und Öffnungen im zweiten Strukturmaterial durch den biologischen Abbau des ersten Strukturmaterials entstehen, die entlang der Durchdringung verlaufen.

Noch weiter ist es bevorzugt, dass das erste Strukturmaterial und das zweite Strukturmaterial als Schichtverbund miteinander verbunden sind, das zweite Strukturmaterial eine Vielzahl von zweiten Perforationsöffnungen aufweist und das erste Strukturmaterial keine Perforationsöffnungen aufweist, oder eine Vielzahl von ersten Perforationsöffnungen aufweist, die kleiner sind als die zweiten Perforationsöffnungen. Durch diese Ausgestaltung wird erreicht, dass durch den schnelleren Abbau des ersten Strukturmaterials größere, die Geomaterialbahn insgesamt durchsetzende Öffnungen entstehen können.

Ein weiterer Aspekt der Erfindung ist ein Verfahren zur ortsabhängigen Bodenstabilisierung mittels einer Geomaterialbahn, mit den Schritten:

Bestimmen der Intensität eines Einflussparameters am Einbauort, wobei die Intensität des Einflussparameters ausgewählt ist aus:

- Intensität einer Strahlungseinwirkung einer elektromagnetischen Strahlung,

- Höhe einer Temperatur,

- Konzentration eines chemisch und/oder biochemisch mit der Geomaterialbahn reagierenden Stoffes,

- Konzentration einer Konzentration an Bakterien, und/oder

- Konzentration von Pilzen,

Bestimmen eines oder mehrerer dieser Einflussparameter an einem vom Einbauort beabstandeten Verbringort,

- Einbauen der Geomaterialbahn am Einbauort, wobei die Geomaterialbahn ein Strukturmaterial umfasst, das

   ○ unter der Intensität des Einflussparameters am Verbringort eine biologische Abbaubarkeit in dem Maße aufweist, dass innerhalb von sechs Monaten ein Verbringortrestanteil in einem Sieb von 2mm verbleibt, wenn das Material bzw. seine Bestandteile gesiebt werden,

   ○ wobei der Verbringortrestanteil kleiner als 30 Gew.-% des Materials ist,

   ○ unter der Intensität des Einflussparameters am Einbauort eine biologische Abbaubarkeit in dem Maße aufweist, dass innerhalb von sechs Monaten ein Einbauortrestanteil des Materials in einem Sieb von 2mm verbleibt, wenn das Material bzw. seine Bestandteile gesiebt werden,

   ○ wobei der Einbauortrestanteil größer ist als der Verbringortrestanteil.

Gemäß diesem Aspekt der Erfindung wird eine ortsabhängige Bodenstabilisierung mittels einer Geomaterialbahn erreicht. Hierunter ist zu verstehen, dass die Geomaterialbahn eine biologische Abbauzeitdauer am Einbauort und eine hiervon verschiedene biologische Abbaubarkeit am Verbringort aufweist, die, wie zuvor, beispielsweise analog zur Normierung einer Abbaubarkeit nach ISO16929 oder dem marinen Degradationstest - allerdings mit den am Einbauort bzw. am Verbringort ermittelten Parametern definiert sein kann. Nach den am Einbauort vorherrschenden Bedingungen können nach einem Zeitraum von sechs Monaten bzw. zwölf Wochen mehr als 10 Gew.-%, insbesondere mehr als 25 Gew.-% oder mehr als 80 Gew.- % des Strukturmaterials als Partikel in einem Sieb von 2mm verbleiben. Hierdurch wird eine verringerte biologische Abbaurate am Einbauort erzielt, die für zahlreiche Anwendungen zur Bodenstabilisierung ausreichend ist und einen zuverlässigen Abbau der Geomaterialbahn bewirkt. Diese biologische Abbaubarkeit wird unter den Bedingungen am Einbauort, insbesondere der genannten Einflussparameter Tempe- ratur, Strahlungseinwirkung, Sauerstoff-, Bakterien- un- d/oder Pilzkonzentration oder dergleichen erreicht. Demgegenüber weist das Material bei dem erfindungsgemäßen Verfahren an einem Verbringort eine höhere biologische Abbaubarkeit auf. Unter den dortigen Bedingungen verbleiben also nach sechs Monaten bzw. zwölf Wochen in einem 2mm Sieb weniger Partikel des Materials als unter den Bedingungen am Einbauort. Dies können am Verbringort bevorzugt weniger als 80 Gew.-%, .-%, insbesondere weniger als 25 Gew.-% oder weniger als 10 Gew.- % des Strukturmaterials innerhalb der sechs Monate bzw. zwölf Wochen in den dort vor- herrschenden Bedingungen mit höherer Abbauge- schwindigkeit erzielt.

Der Verbringort kann hierbei ein Ort sein, an dem die Geomaterialbahn nach Ausbau am Einbauort verbracht wird, beispielsweise deponiert wird und der sich hinsichtlich eines der Einflussparameter vom Einbauort unterscheidet. So kann beispielsweise am Deponieort eine planmäßig hergestellte höhere Sauerstoffkonzentration und/oder eine stärkere UV-Einstrahlung und/oder Bakterien- und/oder Pilzkonzentration vorherrschen und den beschleunigten biologischen Abbau der Geomaterialbahn bewirken. Der Verbringort kann auch ein Ort sein, an den die Geomaterialbahn vollständig oder in Fragmenten hingelangt, wenn sie durch Umwelteinflüsse oder andere Einflüsse freigelegt, mechanisch angegriffen wird und dann beispielsweise freiliegt, aufschwimmt oder durch andere Einwirkungen verfrachtet wird. Unter einem Verbringort kann hierbei auch verstanden werden, dass ein ursprünglicher Einbau der Geomaterialbahn am Einbauort unterhalb einer Bodenschicht sich so verändert, dass die Bodenschicht abgetragen wird und die Geomaterialbahn dadurch freiliegt. Dies ist zum Beispiel in vielen marinen Anwendungen des Küstenschutzes und des Kolkschutzes, in denen durch Wasser- und Wellenbewegungen eine Abtrennung und Verbringung des Materials vom Einbauort zu einem Verbringort erfolgen kann, der Fall. Am Verbringort wird die Geomaterialbahn beschleunigt abgebaut und stellt hierdurch keine relevante Umweltbelastung dar.

Dabei ist es bevorzugt, wenn der Einbauort eine Umgebung aufweist, die eine gegenüber dem Verbringort niedrigere Temperatur und/oder einen niedrigeren Sauerstoffgehalt und/oder niedrigere Bakterien- und/oder Pilzkonzentration aufweist. Diese Einflussparameter eignen sich insbesondere für Geomaterialbahnen auf Viskosebasis wie Lyocell gut dafür, um die unterschiedliche biologische Abbaugeschwindigkeit am Einbauort gegenüber dem Verbringort zu erzielen.

Dabei kann insbesondere der Einbauort am Meeresgrund liegen und die Geomaterialbahn durch Strömung und/oder Dichteunterschiede aufschwimmen oder durch anthropogene Einflüsse an die Oberfläche gelangen. Der Verbringort zeichnet sich folglich dadurch aus, dass eine höhere Sauerstoffkonzentration und Temperatur in den oberen Wasserschichten und eine erhöhte UV-Einstrahlung vorliegt und für den beschleunigten Abbau sorgt.

Noch weiter ist es bevorzugt, wenn das Strukturmaterial ein Material auf Viskosebasis ist, insbesondere Lyocell. Ein solches Strukturmaterial hat sich insbesondere als geeignet für die selektiv beschleunigten biologischen Abbauraten am Verbringort gegenüber dem Einbauort erwiesen.

Gemäß diesem Aspekt der Erfindung wird die Geomaterialbahn folglich derart verwendet, dass sie ein Strukturmaterial umfasst, das

- unter einer ersten Intensität eines Einflussparameters an einem Einbauort eine biologische Abbaubarkeit in dem Maße aufweist, dass

- In einem Kompostierungstest mit folgenden Parametern

  ∘ Proben mit einer Länge von 10cm, einer Breite von 10cm und einer Originalmaterialdicke

  ∘

  50°C +/- 5°C

  ∘ thermophile Bedingungen gemäß ISO 16929, sofern diese nicht durch spezifische Intensitäten von spezifischen Einflussparametern am Einbauort definiert sind,

  ∘ Aussiebung der Feststoffe nach sechs Monaten in einem Sieb mit 2mm Maschenweite (Mesh 8,75)

  bei der Siebung mehr als 50 Trocken-Gew.-% des Ausgangsmaterial im Sieb verbleibt, oder dass

- in einem marinen Inkubationstest, mit folgenden Parametern:

  ∘ Proben mit einer Länge von 2cm, einer Breite von 2cm und einer Originalmaterialdicke

  ∘

  30°C +/- 2°C

  ∘ Aerobe Bedingungen in Meerwasser mit einem Salzgehalt von 3,5 Gew.-% +/- 1Gew.-%, sofern diese nicht durch spezifische Intensitäten von spezifischen Einflussparametern am Einbauort definiert sind,

  ∘ Aussiebung der Feststoffe nach 4, 8 und 12 Wochen in einem Sieb mit 2mm Maschenweite (Mesh 8,75)

bei der Siebung nach 12 Wochen mehr als 10 Trocken-Gew.-%, insbesondere mehr als 25 Trocken-Gew.-% oder mehr als 80 Trocken-Gew.-% des Ausgangsmaterial im Sieb verbleibt, und

unter einer zweiten Intensität des Einflussparameters an einem Verbringort eine biologische Abbaubarkeit in dem Maße aufweist, dass innerhalb von sechs Monaten in dem Kompostierungstest bzw. zwölf Wochen in dem marinen Inkubationstest und

weniger als 80 Gew.-%, insbesondere weniger als 25 Gew.-% oder weniger als 10 Gew.-% der Trockenmasse des ersten Strukturmaterials nach einer Siebung durch ein 2mm-Sieb im Sieb verbleibtwobei die Intensität des Einflussparameters ausgewählt ist aus:

- einer Intensität einer Strahlungseinwirkung einer elektromagnetischen Strahlung

- einer Höhe einer Temperatur,

- einer Konzentration eines chemisch und/oder biochemisch mit der Geomaterialbahn reagierenden Stoffes,

- einer Konzentration an Bakterien,

- einer Konzentration von Pilzen,

in solcher Weise, dass die Geomaterialbahn zu einem Einbauzeitpunkt am Einbauort eingebaut wird und zu einem dem Einbauzeitpunkt folgenden späteren Zeitpunkt an den Verbringort transportiert wird.

Gemäß dieser Verwendung wird eine Geomaterialbahn solcherart eingesetzt, dass sie an einem Einbauort eine vorbestimmte, nicht über eine bestimmte biologische Abbaugeschwindigkeit hinausgehende Abbaurate aufweist, was durch die dort vorherrschenden o.g. Einflussparameter erzielt wird. Demgegenüber wird die Geomaterialbahn so eingesetzt, dass sie dann, wenn sie vom Einbauort an einen Verbringort transportiert wird, was durch einen planmäßigen Transport oder eine unplanmäßige Verfrachtung erfolgen kann, eine höhere Abbaugeschwindigkeit aufweist und sich hierdurch am Verbringort beschleunigt im Vergleich zum Einbauort biologisch abbaut. Dieser beschleunigte Abbau wird erreicht durch die Abhängigkeit der Abbaugeschwindigkeit von einer dort unterschiedlichen Intensität eines Einflussparameters - gfs. auch durch mehrere verschiedene Einflussparameter, die in verschiedenen Intensitäten am Einbauort und am Verbringort vorherrschen - und die in den zuvor definierten Materialprüfungen zur Kompositierbarkeit bzw. zur marinen Degradation als Einflussparameter anstelle der vorgegebenen Parameter eingesetzt werden.

Ein weiterer Aspekt der Erfindung betrifft die Verwendung einer Geomaterialbahn, die ein Strukturmaterial umfasst, das

- unter einer vorbestimmten Intensität eines Einflussparameters an einem Einbauort eine biologische Abbaubarkeit in dem Maße aufweist, dass

- in einem Kompostierungstest mit folgenden Parametern:

    ◦ Proben mit einer Länge von 10cm, einer Breite von 10cm und einer Originalmaterialdicke

    ◦

    50°C +/- 5°C

    ◦ thermophile Bedingungen gemäß ISO 16929, sofern diese nicht durch spezifische Intensitäten von spezifischen Einflussparametern am Einbauort definiert sind,

    ◦ Aussiebung der Feststoffe nach sechs Monaten in einem Sieb mit 2mm Maschenweite (Mesh 8,75)

    bei der Siebung weniger als 50 Trocken-Gew.-% des Ausgangsmaterial im Sieb verbleibt, oder

- in einem marinen Inkubationstest, mit folgenden Parametern:

    ◦ Proben mit einer Länge von 2cm, einer Breite von 2cm und einer Originalmaterialdicke

    ◦

    30°C +/- 2°C

    ◦ Aerobe Bedingungen in Meerwasser mit einem Salzgehalt von 3,5 Gew.-% +/- 1Gew.-%, sofern diese nicht durch spezifische Intensitäten von spezifischen Einflussparametern am Einbauort definiert sind,

    ◦ Aussiebung der Feststoffe nach 4, 8 und 12 Wochen in einem Sieb mit 2mm Maschenweite (Mesh 8,75)

bei der Siebung nach 12 Wochen weniger als 20 Trocken-Gew.-% des Ausgangsmaterial im Sieb verbleibt.

wobei die vorbestimmte Intensität des Einflussparameters ausgewählt ist aus:

- einer Intensität einer Strahlungseinwirkung einer elektromagnetischen Strahlung

- einer Höhe einer Temperatur,

- einer Konzentration eines chemisch und/oder biochemisch mit der Geomaterialbahn reagierenden Stoffes,

- einer Konzentration an Bakterien,

- einer Konzentration von Pilzen,

zum Stabilisieren einer Bodenschichtlage im Hochwasserschutz oder Kolkschutz.

Gemäß diesem Aspekt der Erfindung wird eine Geomaterialbahn, insbesondere eine Geomaterialbahn der zuvor beschriebenen Bauart, dazu eingesetzt, um eine Bodenstabilisierung zum Kolkschutz oder im Hochwasserschutz zu erreichen. Als Hochwasserschutz kann hierbei jegliche Art von Uferbefestigung am Meeresufer, am Ufer von fließenden und stehenden Gewässern und Seen vorgesehen sein, wobei die Geomaterialbahn im Bereich unterhalb der Wasseroberfläche oder oberhalb der Wasseroberfläche mit jeweiligem optionalem Trockenfallen bzw. Nasswerden angeordnet sein kann. Sie dient in diesem Fall der Sohl-, Böschungs- oder Deichstabilisierung und kann dauerhaft eingesetzt sein oder temporär während der Baumaßnahme bis zu einem ausreichenden Grad der Durchwurzelung mit Pflanzenwerk. Als Kolkschutz wird hierbei der Schutz gegenüber Bodenmaterialverbringung durch Strömungen verstanden. Auch hier kann ein dauerhafter oder temporärer Schutz des Bodens durch die Geomaterialbahn vorgesehen sein. Insbesondere kann ein solcher Kolkschutz beispielsweise durch mit Partikelmaterial wie Sand oder dergleichen befüllte flexible Container, die aus der Geomaterialbahn hergestellt sind, bewerkstelligt werden, die auf der zu stabilisierenden Bodenlage abgelegt werden.

Die Geomaterialbahn wird dabei solcherart verwendet, dass ein gezielter biologischer Abbau erreicht wird. Dieser gezielte biologische Abbau kann einerseits darin bestehen, dass anders als in den vorbekannten Anwendungen am Einbauort selbst eine biologische Abbaubarkeit auftritt und sich die Geomaterialbahn folglich planmäßig innerhalb eines bestimmten Zeitraums auflöst. Die biologische Abbaubarkeit kann auch solcherart vorgesehen sein, dass die Geomaterialbahn an einem Verbringort eine höhere biologische Abbaubarkeit hat als an dem Einbauort. Hierbei wird erreicht, dass dann, wenn die Geomaterialbahn beabsichtigt oder unbeabsichtigt vom Einbauort weg transportiert wird, sie sich an einem Verbringort mit anderen Einflussparametern schneller biologisch abbaut und folglich keine Umweltbelastung darstellt.

Bevorzugt ist vorgesehen, dass die Geomaterialbahn zur Herstellung von befüllbaren Behältern verwendet wird und diese Behälter so verwendet werden, dass sie befüllt am Meeresgrund platziert werden und hierdurch einen Kolkschutz an strömungsbelasteten Orten bereitstellt. Mit dieser Fortbildung wird ein besonders wirksamer Kolkschutz erreicht.

Noch weiter kann die Verwendung fortgebildet werden, indem die Geomaterialbahn im Ufer- oder Küstenschutz an einem Einbauort mit gelegentlichem Trockenfallen oder an einem Einbauort mit gelegentlichem Nasswerden eingebaut wird, wobei die Geomaterialbahn bevorzugt eine geringere Dichte als Wasser aufweist. Insbesondere bei gelegentlichem Trockenfallen oder Nasswerden kann ein unbeabsichtigtes Freisetzen einer Geomaterialbahn bei solchen Befestigungsmaßnahmen auftreten und dann die besondere Eigenschaft eines biologischen Abbaus sich vorteilhaft auswirken.

Ein weiterer Aspekt der Erfindung ist ein Verfahren zur Bodenbefestigung mittels einer Geomaterialbahn, umfassend die Schritte: a) Bestimmen eines eine Bodeneigenschaft an einem Einbauort charakterisierenden Bodenparameterwertes, b) Bestimmen eines eine biologische Abbaugeschwindigkeit charakterisierenden Abbauwertes, c) Auswählen eines Mischungsverhältnisses eines ersten und zweiten Strukturmaterials, die eine unterschiedliche biologische Abbaubarkeit aufweisen, anhand des Bodenparameterwertes und des Abbauwertes, d) Verbinden des ersten und zweiten Strukturmaterials zu einer Geomaterialbahn in dem Mischungsverhältnis, e) Bereitstellen der Geomaterialbahn zum Einbau am Einbauort.

Gemäß diesem Aspekt der Erfindung wird eine Bodenbefestigung an einem Einbauort vorgenommen, indem dort eine Geomaterialbahn bereitgestellt wird, um diese in der Bodenschicht am Einbauort einzubauen. Dazu müssen Bodeneigenschaften bekannt sein. Dies bedeutet, dass zumindest eine Eigenschaft des Bodens, welche die biologische Abbaubarkeit in relevanter Weise beeinflusst, ermittelt oder gemessen wird. So kann beispielsweise der Feuchtigkeitsgehalt des Bodens, der pH-Wert, die Nährstoffkonzentration, das Vorhandensein von Bakterien und Pilzen und/oder die Temperatur des Bodens als durchschnittliche Temperatur über einen Tageszeitraum, einen Wochenzeitraum, einen Monatszeitraum oder einen Jahreszeitraum angenommen oder ermittelt werden. Es kann weiterhin die Intensität der UV-Einstrahlung am Einbauort gemessen werden.

Diese Einbauort-spezifischen Parameter berücksichtigen die Einflussparameter auf den biologischen Abbauvorgang, welche am Einbauort vorherrschen. Aus diesen Parametern kann ein Kennwert, beispielsweise als dimensionsloser Faktor oder als Erfahrungswert aus Tabellen, bestimmt werden. So kann beispielsweise die zuvor erläuterte nach ISO 16929 definierte Kompostierbarkeit oder Degradation unter marinen Bedingungen als Normvergleichswert dienen und der Abbauwert in Relation zu diesem Vergleichswert definiert sein, beispielsweise indem eine prozentual geringere Abbaueigenschaft durch die Bodeneigenschaften durch eine entsprechende Prozentzahl unter 100% charakterisiert wird oder eine höhere biologische Abbaugeschwindigkeit am Einbauort durch den Abbauwert charakterisiert wird, indem ein über 100 % liegender Wert als Abbauwert angesetzt wird.

Weiterhin wird ein Abbauwert bestimmt, der definiert, innerhalb welchen Zeitraums ein bestimmter biologischer Abbaugrad der Geomaterialbahn oder eines Bestandteils der Geomaterialbahn erreicht sein soll.

Anhand des Bodenparameterwertes und des Abbauwertes wird dann ein Mischungsverhältnis eines ersten zu einem zweiten Strukturmaterial ausgewählt. Das erste und das zweite Strukturmaterial weisen dabei eine unterschiedliche biologische Abbaubarkeit bzw. Abbaugeschwindigkeit bei dem Bodenparameterwert auf. Durch das Mischungsverhältnis kann dabei eine insgesamt erzielte biologische Abbaugeschwindigkeit der Geomaterialbahn, die aus dem ersten und dem zweiten Strukturmaterial aufgebaut wird, bereitgestellt werden. Diese biologische Abbaugeschwindigkeit hängt dabei von dem Bodenparameterwert ab, der am Einbauort angenommen oder gemessen wurde und soll so ausgewählt sein, dass der gewünschte Abbauwert, welcher die Rate des biologischen Abbaus der Geomaterialbahn beschreibt, erzielt wird.

Nach Auswahl des Mischungsverhältnisses werden das erste und das zweite Strukturmaterial zu der Geomaterialbahn verbunden. Dieses Verbinden kann als Vliesstoff, Maschenware, Wirkware oder in anderer Form erfolgen und soll den ersten und den zweiten Faserstoff mechanisch belastbar miteinander verbinden. Die so hergestellte Geomaterialbahn ist folglich maßgeschneidert für den Einsatz und gezielten biologischen Abbau am Einbauort mit den dort vorherrschenden Bedingungen.

Mit dieser Lösung wird erreicht, dass weder ein zu schneller noch ein zu langsamer biologischer Abbau der Geomaterialbahn auftritt, indem die auf den biologischen Abbau Einfluss nehmenden Bodenparameter in die Gestaltung der Geomaterialbahn einbezogen werden. Hierbei wird ein gezieltes Abbauverhalten, charakterisiert durch den Abbauwert, durch ein Mischungsverhältnis von zwei Faserstoffen eingestellt.

Das Verfahren kann fortgebildet werden, indem der Bodenparameterwert ein Bodenfeuchtigkeitsgehalt des Bodens am Einbauort, beispielsweise zwischen 3 und 300 Gew.-%, ein Boden- pH-Wert des Bodens am Einbauort, beispielsweise zwischen 1 und 13, eine Enzymkonzentration in dem Boden am Einbauort, eine Temperatur zwischen 4°C und 50°C, oder ein aus mehreren dieser Bodenparameterwerte gebildeter Bodenkennwert ist. Mit diesen Bodenparameterwerten werden signifikante Einflussgrößen auf die biologische Abbaugeschwindigkeit typischer Faserstoffe, wie beispielsweise Viskosefasern wie Lyocell bestimmt und können folglich herangezogen werden, um die Geomaterialbahn mit einer individuell für den Einbauort gestalteten biologischen Abbaubarkeit auszubilden.

Dabei ist es besonders bevorzugt, wenn der Abbauwert ein Festigkeitsquotient, gebildet aus dem Verhältnis eines mechanischen Festigkeitswertes zu einer Einbauzeitdauer der Geomaterialbahn im Vergleich zum Ausgangswert, ein Durchlässigkeitsquotient, gebildet aus dem Verhältnis einer Porosität zu einer Einbauzeitdauer der Geomaterialbahn im Vergleich zum Ausgangswert, oder ein aus mehreren dieser Abbauwerte gebildeter Abbaukennwert ist. Gemäß dieser Ausführungsform wird der Abbauwert entweder als Festigkeitsquotient oder als Durchlässigkeitsquotient definiert oder als ein Abbaukennwert, der aus dem Festigkeitsquotienten und dem Durchlässigkeitsquotienten berechnet ist. Der Festigkeitsquotient charakterisiert hierbei die Abnahme der mechanischen Festigkeit der Geomaterialbahn über eine Verweildauer der Geomaterialbahn im Boden. Dieser Festigkeitsquotient wird gebildet aus dem Verhältnis des mechanischen Festigkeitswertes zum Zeitpunkt des Einbaus, also bei noch nicht aufgetretenem biologischen Abbau, und dem mechanischen Festigkeitswert nach einer vorbestimmten Verweildauer, die beispielsweise normiert auf drei oder sechs Monate sein kann und die mechanische Festigkeit nach erfolgtem biologischem Abbau zu einem bestimmten Grad charakterisiert. In analoger Weise wird der Durchlässigkeitsquotient bestimmt, indem eine Porosität zu Beginn, also zum Zeitpunkt des Einbaus im Verhältnis zu einer Porosität nach einem erfolgten biologischen Abbau über einen vorbestimmten Zeitraum gesetzt wird. Durch diese Charakterisierung der Abbauwerte lassen sich die gewünschten Eigenschaften gezielt bestimmen und folglich beeinflussen, indem eine entsprechende Materialauswahl erfolgt. Ein Festigkeitsquotient liegt in der Größenordnung 1,0 bis 0 und beträgt typischer Weise 0,25, d.h. die Festigkeit zu einem definierten Zeitpunkt ist nach erfolgtem biologischem Abbau im Vergleich zum Ausgangswert um das Vierfache reduziert. Ein typischer Durchlässigkeitsquotient liegt in der Größenordnung einer bis vier Zehnerpotenzen und beträgt idealerweise > 10, d.h. die Durchlässigkeit ist zu einem definierten Zeitpunkt nach erfolgtem biologischem Abbau im Vergleich zum Ausgangswert um das Zehnfache gestiegen.

Die zuvor beschriebene Geomaterialbahn, die hierfür zuvor beschriebenen spezifischen Verwendungen und die Verfahren zu deren Einsatz können fortgebildet werden, indem die Geomaterialbahn eine Polymergruppe aufweist, die ein mit einer Isotopenmarkierung versehenes Molekül umfasst, insbesondere eine $^{13}C$ oder $^{18}O$-Isotopenmarkierung. Gemäß dieser Fortbildungsform wird die Geomaterialbahn mit einer Isotopenmarkierung versehen und kann daher auch in später vorliegender, etwaig fragmentierter Form eindeutig identifiziert werden. Auf diese Art und Weise kann daher eine auftretende Umweltbelastung zweifelsfrei zugeordnet oder ausgeschlossen werden und die Ursache einer solchen Umweltbelastung rasch und zuverlässig aufgefunden werden.

Weiterhin kann das Verfahren, die Verwendung und die Geomaterialbahn fortgebildet werden, indem die Geomaterialbahn ein Strukturmaterial umfasst oder aus einem oder mehreren Strukturmaterialien besteht, das/die verstoffwechselbar ist/sind. Eine solche Verstoffwechselung durch Lebewesen, wie Säugetiere, Fische oder Kleinstlebewesen wie Mikroben, führt zur Reintegration der Geomaterialbahn in den Biokreislauf und damit zur umweltunschädlichen Beseitigung. Die Verstoffwechselung kann bevorzugt an Fragmenten wie zerkleinerten Faserresten der Geomaterialbahn erfolgen. Unter einer Verstoffwechselung ist hierbei einerseits eine biologisch unbedenkliche Verträglichkeit der Geomaterialbahn für Lebewesen zu verstehen, darüber hinaus eine Fähigkeit der Geomaterialbahn, unter den Stoffwechselprozessen im Verdauungstrakt eines Lebewesens chemisch verändert und abgebaut zu werden.

Weiterhin ist es bevorzugt, wenn die Geomaterialbahn durch einen ein- oder mehrschichtigen Filtervliesstoff gebildet wird, der aus mindestens zwei unterschiedlichen Strukturmaterialen hergestellt ist, die zu einem Vliesstoff miteinander verbunden sind, wobei

- Ein erstes Strukturmaterial unter einer vorbestimmten Intensität eines Einflussparameters an einem Einbauort eine biologische Abbaubarkeit in dem Maße aufweist, dass

   - In einem Kompostierungstest mit folgenden Parametern:

      ◦ Proben mit einer Länge von 10cm, einer Breite von 10cm und einer Originalmaterialdicke

      ◦

      50°C +/- 5°C

      ◦ thermophile Bedingungen gemäß ISO 16929, sofern diese nicht durch spezifische Intensitäten von spezifischen Einflussparametern am Einbauort definiert sind,

      ◦ Aussiebung der Feststoffe nach sechs Monaten in einem Sieb mit 2mm Maschenweite (Mesh 8,75)

   - bei der Siebung weniger als 80 Gew.-%, insbesondere weniger als 25 Gew.-% oder weniger als 10 Gew.- % der Trockenmasse des ersten Strukturmaterials nach zwölf Wochen im Sieb verbleibt, oder

- in einem marinen Inkubationstest, mit folgenden Parametern:

  ◦ Proben mit einer Länge von 2cm, einer Breite von 2cm und einer Originalmaterialdicke

  ◦

  30°C +/- 2°C

  ◦ Aerobe Bedingungen in Meerwasser mit einem Salzgehalt von 3,5 Gew.-% +/- 1Gew.-%, sofern diese nicht durch spezifische Intensitäten von spezifischen Einflussparametern am Einbauort definiert sind,

  ◦ Aussiebung der Feststoffe nach 4, 8 und 12 Wochen in einem Sieb mit 2mm Maschenweite (Mesh 8,75)

bei der Siebung nach 12 Wochen weniger als 80 Gew.-%, insbesondere weniger als 25 Gew.-% oder weniger als 10 Gew.- % der Trockenmasse des ersten Strukturmaterials bei der Siebung nach zwölf Wochen im Sieb verbleibt.

wobei die vorbestimmte Intensität des Einflussparameters ausgewählt ist aus:

- einer Intensität einer Strahlungseinwirkung einer elektromagnetischen Strahlung

- einer Höhe einer Temperatur,

- einer Konzentration eines chemisch und/oder biochemisch mit der Geomaterialbahn reagierenden Stoffes,

- einer Konzentration an Bakterien,

- Einer Konzentration von Pilzen,

und ein zweites Strukturmaterial mit dem ersten Strukturmaterial zu dem Filtervliesstoff verbunden ist, wobei das zweite Strukturmaterial unter der gleichen vorbestimmten Intensität des Einflussparameters an dem gleichen Einbauort eine geringere biologische Abbaubarkeit in dem Maße aufweist, dass innerhalb von sechs Monaten unter den gleichen Bedingungen ein größerer Gew.-%-Anteil der Trockenmasse des zweiten Strukturmaterials nach sechs Monaten bzw. zwölf Wochen bei einer Siebung durch ein 2mm-Sieb im Sieb verbleibt als beim ersten Strukturmaterial. Gemäß dieser Fortbildungsform ist die Geomaterialbahn als Vliesstoff ausgebildet, der aus zwei unterschiedlichen Strukturmaterialien besteht, die eine unterschiedliche biologische Abbaugeschwindigkeit unter den gegebenen, vorbestimmten Parametern aufweist. Hierdurch kann der Vliesstoff einerseits eine gezielte mechanische Strukturschwächung durch den biologischen Abbauvorgang erfahren, andererseits eine geometrische Änderung mit Porenbildung, Perforationsbildung oder dergleichen, um beispielsweise einen Durchwurzelungsprozess zu befördern.

Eine weitere Fortbildung sieht vor, dass die geomaterialbahn, das Verfahren zu deren Herstellung oder deren Einbau und deren verwendung so fortgebildet wird, dass die Geomaterialbahn als Element in Konstruktionen, die der Beinflussung von Luftströmungen dienen, so eingebaut wird, dass insbesondere die Geschwindigkeit der Luftströmung lokal verringert wird zum Zwecke der Ablagerung von Partikeln, die bei nicht verringerter Luftgeschwindigkeit in der Luft schwebend transportiert werden, springen oder rollen. Die Geomaterialbahn, die Verwendung und das Verfahren dient damit der Ablagerung von Mineralstoffen, insbesondere Sand, an z.B. Küstenabschnitten, die durch Sanderosion gefährdet sind. Die Verringerung der Luftgeschwindigkeit führt damit zum Ablagern von Sand, bevorzugt in Lee der Konstruktionen. Die Konstruktion wird dabei teilweise oder vollständig eingesandet. Die erfindungsgemäße Geomaterialbahn wird damit Bestandteil der Sandablagerung, und kann, soweit die Konstruktion innerhalb der Sandablagerung erfindungsgemäß abgebaut werden oder, wenn die Konstruktion durch eine Veränderung der Erosionsbedingungen wieder freigelegt wird, erfindungsgemäß am Einbau- oder Verbringungsort abgebaut werden.

Bevorzugte Ausführungsformen werden anhand der Figuren erläutert. Es zeigen:

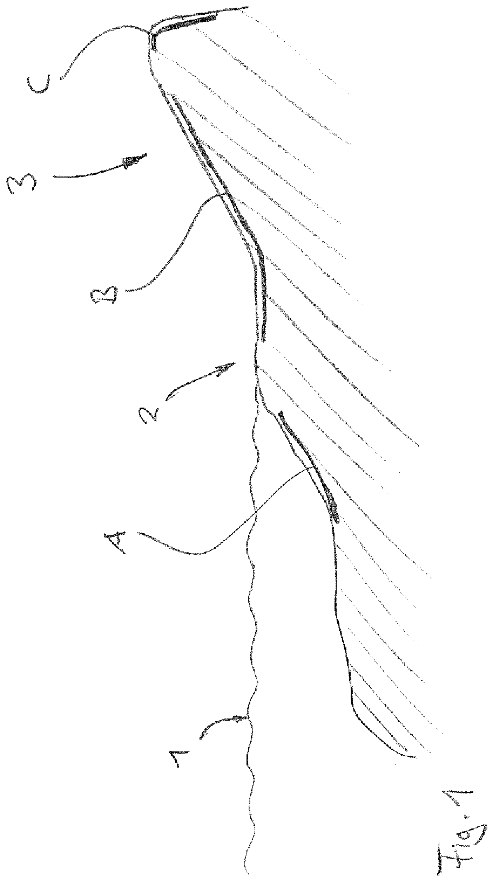

Fig. 1        eine schematische Darstellung einer Verwendung der erfindungsgemäßen Geomaterialbahn in drei unterschiedlichen Anordnungen zum Küstenschutz,

Fig. 2a, b    eine Verwendung der erfindungsgemäßen Geomaterialbahn zur Böschungsbefestigung in zwei unterschiedlichen Durchwurzelungszeitpunkten,

Fig. 3        eine schematische Darstellung einer ersten Ausführungsform der erfindungsgemäßen Geomaterialbahn,

Fig. 4        eine schematische Darstellung einer zweiten Ausführungsform der erfindungsgemäßen Geomaterialbahn,

Fig. 5     eine schematische Darstellung einer dritten Ausführungsform der erfindungsgemäßen Geomaterialbahn,

Fig. 6     eine schematische Darstellung einer vierten Ausführungsform der erfindungsgemäßen Geomaterialbahn.

Die erfindungsgemäße Geomaterialbahn kann grundsätzlich in drei unterschiedlichen Einbausituationen bezüglich eines Wasserkontakts im Uferböschungsbereich eingebaut werden. Ausgehend von einem natürlichen Uferbereich 2, an den die Wasserlinie oder bei tidenabhängigen Gewässern die durchschnittliche Wasserhöhe angrenzt und die ggf. durch einen künstlichen Deich 3 gegen Hochwassersituationen abgesichert ist, kann eine Geomaterialbahn zunächst in einer Einbaulage A eingesetzt werden, um den Unterwasserterrainverlauf des natürlichen Meeresbodenverlaufs, in dem eine Stabilisierung des Boden mit Pflanzen nur unzureichend möglich ist, zu stabilisieren. In dieser Einbaulage A ist die Geomaterialbahn in der Regel unter Wasser und kann in Ausnahmefällen bei Niedrigwasser oder starkem Wellengang trockenfallen.

In einer zweiten Einbaulage B ist die Geomaterialbahn zur Befestigung der natürlichen Uferböschung und/oder der Befestigung der künstlichen Deichböschung wasserseitig verbaut. In dieser Einbaulage stabilisiert die Geomaterialbahn den in der Regel trockenen Uferanteil der natürlichen Böschung und ggf. der künstlichen Böschung des Deiches. Sie ist folglich in der Regel trocken, kann aber bei Hochwassersituationen oder bei starkem Wellengang auch unter Wasser stehen.

In einer dritten Einbaulage C ist die Geomaterialbahn in einem Bereich eingesetzt, wie beispielsweise der Rückseite des Deiches, in der sie dem Gewässer selbst nicht ausgesetzt ist und nur bei besonderen Situationen wie einer Überströmung einer Beanspruchung ausgesetzt sein kann. In dieser Einbaulage ist die Geomaterialbahn folglich stets trocken und ist wie in jeder Einbaulage nur durch Regenfälle einer Befeuchtung ausgesetzt.

Jede der drei Einbaulagen erfordert unterschiedlich abgestimmtes Verhalten von Geomaterialbahnen, um ein ökologisch günstiges Verhalten zu erreichen. So wird in der Einbaulage A eine Stabilität der Geomaterialbahn im wässrigen Milieu gefordert, wenn aber aufgrund von abrasiven Ereignissen sich Teile dieser Geomaterialbahn lösen und daher auch nicht mehr an ihrem zur Funktionserfüllung erforderlichen Ort sind, ist ein Abbau dieser gelösten Geomaterialbahnanteile gewünscht. Erfindungsgemäß kann dies erfolgen, indem beispielsweise die Geomaterialbahn aus einem Material ausgebildet ist, das unter Einfluss von UV-Strahlung rasch abgebaut wird. Hierdurch wird erreicht, dass aufschwimmende oder an Land geschwemmte, abgerissene Teile der Geomaterialbahn einem raschen Abbau unterzogen werden, wohingegen am Einbauort, wenn keine UV-Strahlung auf die Geomaterialbahn trifft, die mechanische Stabilität erhalten bleibt. Statt der Spezifikation der Geomaterialbahn auf die UV-Strahlung kann beispielsweise auch eine Spezifikation der biologischen Abbaubarkeit in Abhängigkeit vom Sauerstoffgehalt des Wassers und/oder der Bakterienkonzentration und/oder der Pilzkonzentration in bestimmten Anwendungen erfolgen. Dies eignet sich insbesondere dann, wenn Geomaterialbahnen in großer Meerestiefe eingesetzt werden, wo insbesondere eine niedrige Konzentrationen der vorgenannten Einflussparameter vorherrscht. In diesem Fall kann das Material der Geomaterialbahn so ausgelegt sein, dass es in der planmäßigen Einbausituation und dem umgebenden Wassers mechanisch stabil ist und sich biologisch abbaut, sobald der die Konzentration von Einflussparametern in umgebenden Wasser oder am Verbringungsort erhöht ist.

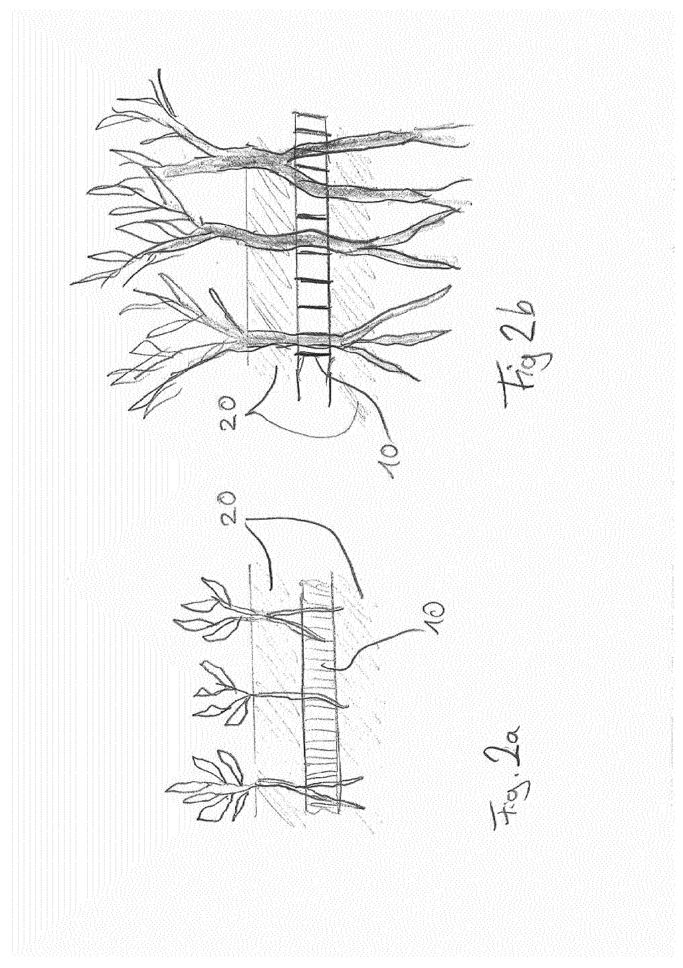

Die Einbausituation gemäß C ist beispielsweise hinsichtlich der Durchwurzelung und des Anpassens der Geomaterialbahn an Durchwurzelungsvorgänge für die Erfindung relevant. Fig. 2a und b zeigen zwei zeitlich aufeinanderfolgende Durchwurzelungssituationen, in denen eine Geomaterialbahn 10 zur Stabilisierung einer Bodenschicht 20 in einer bestimmten Tiefe des Bodens verbaut ist. Wie man aus Fig. 2a erkennt, weist die Geomaterialbahn 10 in einem frühen Stadium, kurz nach Setzen von bodenstabilisierenden Pflanzen, eine hohe Dichte mit nur kleinen Öffnungen auf und stellt hierdurch eine hohe mechanische Stabilisierung des Bodens bereit. Die gesetzten Pflanzen können mit kleinen Wurzeltrieben die Geomaterialbahn durchdringen und werden hierdurch im Wachstum nicht behindert. Ein wirksamer mechanischer Verbund aus Geomaterialbahn und den Pflanzen wird in diesem frühen Stadium bereits erreicht.

Fig. 2b zeigt die gleiche Einbausituation nach einigen Wochen des Pflanzenwachstums. Die Geomaterialbahn hat sich durch einen biologischen Abbau mechanisch teilweise zersetzt. Sie weist größere Öffnungen auf und eine geringere mechanische Stabilität. Durch die größeren Öffnungen werden die wachsenden Pflanzen in ihrer Durchwurzelung und der Vergrößerung der Wurzeldurchmesser nicht gehindert und können daher die mechanische Stabilisierungsfunktion übernehmen. Mit der erfindungsgemäßen Geomaterialbahn wird daher eine kontinuierliche Verlagerung der mechanischen Stabilität der Bodenlage aus der Geomaterialbahn auf die Pflanzen erreicht, wobei gleichzeitig eine gute mechanische Verbindung zwischen den Pflanzen und der Geomaterialbahn aufrechterhalten bleibt und die Geomaterialbahn weiterhin, ggf. in der Richtung unterschiedliche, mechanische Eigenschaften aufweist und Funktionen zur Stabilisierung des Bodens übernimmt.

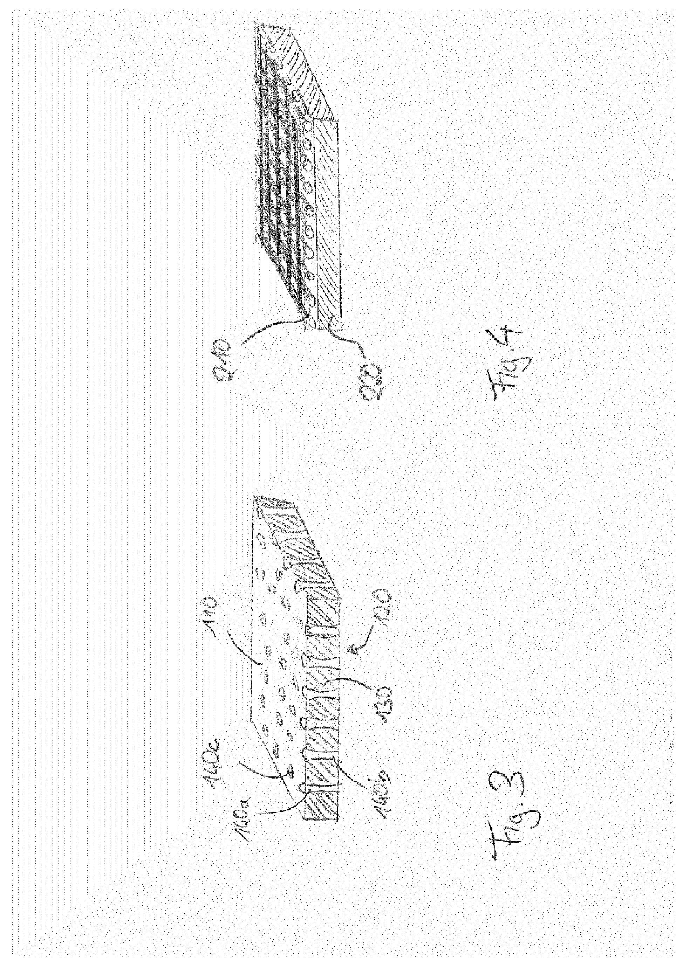

Fig. 3 bis 6 zeigen beispielhafte Ausführungsformen einer Geomaterialbahn. Grundsätzlich können die Geomaterialbahnen gemäß der Erfindung in unterschiedlichen Breiten und Längen bereitgestellt werden. Typische Breiten sind hierbei größer als 1m, 1,5m oder 2m und kleiner als 4m, 5m oder 6m und typische Längen sind hierbei länger als 2 m, 5 m, 10 m, 50 m, wobei die Geomaterialbahn bevorzugt in aufgerolltem Zustand transportfähig ist und beim Einbau abgerollt wird. Die Stärke der Geomaterialbahn kann größer als 1 mm sein, bevorzugt sind Stärken von mehr als 5 mm, 10 mm oder mehr als 20 mm. Die Geomaterialbahn kann ein Flächengewicht aufweisen, das größer als 150, größer als 300 oder größer als 500 g/m$^2$ ist. Das Flächengewicht kann kleiner als 1500, kleiner als 2000 g/m$^2$ oder kleiner als 2500 g/m$^2$ sein.

Fig. 3 zeigt eine erste Ausführungsform mit einer Decklage 110, einer Trägerlage 120 und einer zwischen Decklage 110 und Trägerlage 120 angeordneten Mittellage 130. Deck- und Trägerlage 110 und 120 können aus unterschiedlichen oder übereinstimmenden Materialien bestehen und die Zwischenlage 130 kann übereinstimmend zu der Decklage und Trägerlage ausgebildet sein oder aus einem hiervon verschiedenen Material bestehen.

Die Decklage und die Trägerlage sind mittels einer Vernadelung oder Vernähung oder Verwirken miteinander verbunden, hierzu sind mehrere Vernadelungen 140a, b, c in die Geomaterialbahn eingebracht, welche die Decklage mit der Trägerlage durch die Zwischenlage 130 hindurch verbinden. Bei dieser Ausgestaltung einer Geomaterialbahn kann beispielsweise die Decklage aus einem Material bestehen, welches biologisch schneller abgebaut wird als die Trägerlage 120. Hierdurch entstehen nach einem teilweisen oder vollständigen biologischen Abbau der Vernadelungs- oder Vernähungs- oder Verwirkungsanteile der Geomaterialbahn Kanäle, die sich von der Oberseite zur Unterseite der Geomaterialbahn erstrecken und beispielsweise Raum für Durchwurzelungen oder Drainageeffekte bieten.

Fig. 4 zeigt eine zweite Ausführungsform einer Geomaterialbahn, die eine obere Gitterlage 210 und eine darunterliegende Vlieslage 220 aufweist. Die Gitterlage 210 ist durch ein kreuzweise gebildetes Gitter aus starken Einzelfasern oder -stäben gebildet, die Gitteröffnungen von einer bestimmten Größe, beispielsweise 10 x 10 mm bis 40 x 40 mm, ausbilden. Die Vlieslage ist aus dichten, zufällig orientierten Fasern eines unterschiedlichen Materials zu der Lage 210 ausgebildet. Diese Vlieslage bewirkt insgesamt einen Verschluss der Öffnungen der Gitterlage 210, sodass sich eine insgesamt für gröbere Partikel undurchlässige Geomaterialbahn ergibt, die eine Durchlässigkeit für Flüssigkeiten und Gase aufweist. Die Vlieslage 220 ist aus einem Material wie beispielsweise Lyocell aufgebaut und baut sich biologisch schneller ab als die Gitterlage 210. Hierdurch reduziert sich die mechanische Festigkeit der Geomaterialbahn innerhalb der kurzen biologischen Abbauzeit der Vlieslage 220 und die Geomaterialbahn reduziert sich nach Abbau der Vlieslage 220 auf die verbleibende Gitterlage 210 mit den darin ausgebildeten Öffnungen, die wiederum für eine günstige Durchwurzelung entsprechenden Raum bereitstellen.

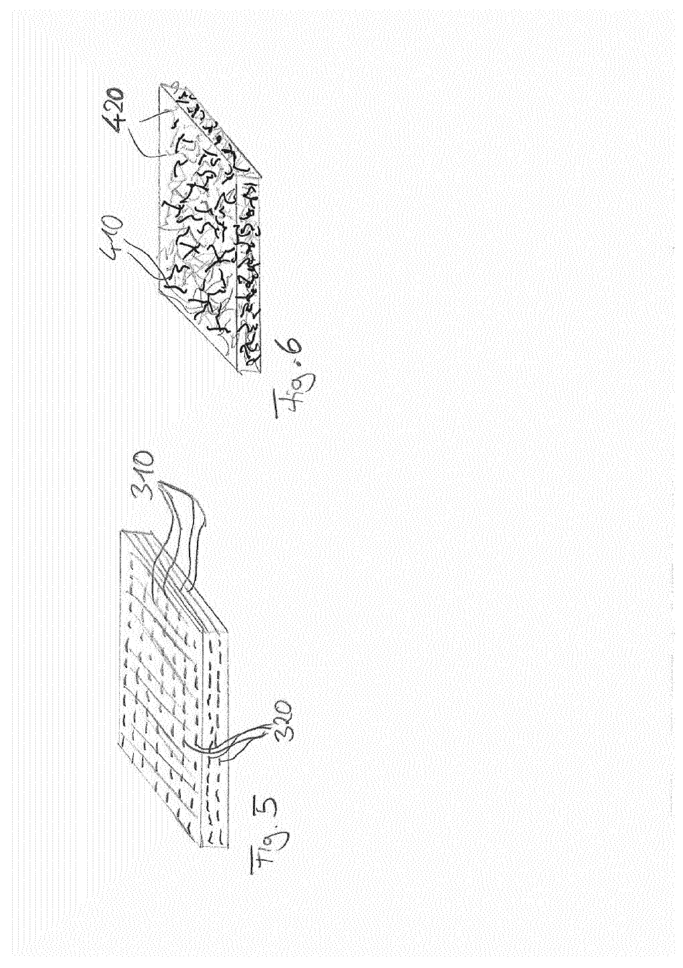

Fig. 5 zeigt eine dritte Ausführungsform, welche grundsätzlich als einschichtige Geomaterialbahn ausgebildet ist. In der Geomaterialbahn sind in einer ersten Richtung Fasern 310 eines ersten Materials angeordnet und in einer zweiten, quer zur ersten Richtung liegenden Richtung Fasern 320 angeordnet und bilden hierdurch jeweils Faserlagen. Die Fasern 310 und 320 können miteinander verbunden sein, beispielsweise durch Verschweißung, Verklebung, durch Verschlaufung, Vernadelung, Webtechniken oder Wirktechniken und/oder mittels einer Deck- und Trägerlage ober und unterhalb der Fasern 310 und 320. Die Fasern 310 sind aus einem unterschiedlichen Material als die Fasern 320, wobei das Material, aus dem die Fasern 320 ausgebildet sind, schneller biologisch abgebaut wird als das Material, aus dem die Fasern 310 ausgebildet sind. Durch dieses biologische Abbauverhalten der Geomaterialbahn weist die Geomaterialbahn initial eine Belastbarkeit in Längs- und Querrichtung auf, entsprechend dem Verlauf der Fasern 310, 320. Mit zunehmendem biologischen Abbau der Fasern 320 nimmt die Festigkeit und Belastbarkeit in der Längsrichtung entlang dem Verlauf der Fasern 320 ab, sodass sich ein anisotropes mechanisches Belastungsverhalten der Geomaterialbahn ergibt.

Fig. 6 zeigt eine vierte Ausführungsform, bei der zwei unterschiedliche Materialien zu einer Vlieslage verarbeitet sind, welche eine Geomaterialbahn darstellt oder eine Schichtlage einer Geomaterialbahn darstellen kann. Die zwei unterschiedlichen Materialien 410, 420 sind unorientiert als Kurz- oder Langfasern oder Endlosfasern zu einem Vlies verarbeitet und miteinander verbunden. Das Material 420 baut sich biologisch schneller ab als das Material 410, wodurch die Dichte der Geomaterialbahn mit zunehmendem biologischen Abbau in der Einbausituation abnimmt und die Geomaterialbahn durchlässiger wird und/oder seine mechanischen Eigenschaften verändert.

Grundsätzlich ist zu verstehen, dass die vier Ausführungsbeispiele auch miteinander kombiniert werden können, indem mehrschichtige Geomaterialbahnen daraus hergestellt werden, die kombinierte Eigenschaften dieser Ausführungsbeispiele aufweisen. Weiterhin ist zu verstehen, dass die Kombination der vier Ausführungsbeispiele auch solcherart erfolgen kann, dass deren Eigenschaften in einer einzigen Schichtlage einer Geomaterialbahn vereint werden, beispielsweise, indem die Gitterstruktur 210 der zweiten Ausführungsform mit den anisotrop sich biologisch abbauenden Fasern 310, 320 der dritten Ausführungsform ausgebildet wird.

Das biologische Abbauverhalten kann grundsätzlich am Einbauort und angepasst auf die dort herrschenden Bedingungen eingestellt werden. So kann bei allen Ausführungsformen in Anpassung an die biologischen Abbaueigenschaften der Anteil des einen Materials im Verhältnis zum Anteil des anderen Materials erhöht oder verringert werden, um ein gewünschtes biologisches Abbauverhalten in Anpassung an die herrschenden Bedingungen zu erhalten. Weiterhin können die biologischen Abbaueigenschaften durch äußere Einflüsse wie UV-Strahlung und/oder Sauerstoffgehalt und/oder Konzentration von Bakterien, Pilzen oder chemischen Einflüssen der Umgebung beeinflusst oder sogar erst ausgelöst werden, wodurch sich ein spezifisches Verhalten der Geomaterialbahnen hinsichtlich des biologischen Abbaus ergibt, wenn diese von einem Ort an einen anderen Ort verbracht werden, an dem sich diese spezifischen Umgebungsbedingungen ändern.

**Patentansprüche**

1. Geomaterialbahn, umfassend

   - ein erstes organisches Strukturmaterial und ein zweites, von dem ersten verschiedenes Strukturmaterial, das mit dem ersten Strukturmaterial zur Ausbildung einer flächigen, sich in zwei zueinander senkrecht stehenden Richtungen erstreckenden Materialverbundbahn miteinander verbunden ist,
   **dadurch gekennzeichnet, dass** das erste Strukturmaterial ein organisches Material ist und das zweite Strukturmaterial ein organisches oder anorganisches Material ist,

   - das erste Strukturmaterial eine erste Biodegradierbarkeit in dem Maße aufweist, dass
   - In einem Kompostierungstest mit folgenden Parametern:

      ◦ Proben mit einer Länge von 10cm, einer Breite von 10cm und einer Originalmaterialdicke,
      ◦

      50°C +/- 5°C,

      ◦ thermophile Bedingungen gemäß ISO 16929,
      ◦ Aussiebung der Feststoffe nach sechs Monaten in einem Sieb mit 2mm Maschenweite (Mesh 8,75)

   bei der Siebung weniger als 80 Gew.-%, insbesondere weniger als 50 Gew.-%, weniger als 25 Gew.-% oder weniger als 10 Gew.- % Trockenmasse der Trockenmasse des Ausgangsmaterials im Sieb verbleibt, oder
   - in einem marinen Inkubationstest, mit folgenden Parametern:

      ◦ Proben mit einer Länge von 2cm, einer Breite von 2cm und einer Originalmaterialdicke,

      ◦

      30°C +/- 2°C,

      ◦ aerobe Bedingungen in Meerwasser mit einem Salzgehalt von 3,5 Gew.-% +/- 1Gew.-%,
      ◦ Aussiebung der Feststoffe nach 4, 8 und 12 Wochen in einem Sieb mit 2mm Maschenweite (Mesh 8,75)

   bei der Siebung nach 12 Wochen weniger als 80 Gew.-%, insbesondere weniger als 50 Gew.-%, weniger als 25 Gew.-% oder weniger als 10 Gew.- % Trockenmasse der Trockenmasse des Ausgangsmaterials im Sieb verbleibt, und

      das zweite Strukturmaterial eine zweite biologische Abbaubarkeit aufweist, die verschieden von der ersten biologischen Abbaubarkeit ist, insbesondere geringer als die erste biologische Abbaubarkeit ist,
      und dass das erste Strukturmaterial in der Geomaterialbahn so angeordnet ist, dass nach teilweisem oder vollständigem biologischem Abbau des ersten Strukturmaterials in der Geomaterialbahn die Geomaterialbahn durchsetzende Öffnungen ausgebildet sind,

2. Geomaterialbahn nach Anspruch 1,
   **dadurch gekennzeichnet, dass** das erste Strukturmaterial das zweite Strukturmaterial teilweise oder vollständig durchdringt, oder das erste Strukturmaterial und das zweite Strukturmaterial als Schichtverbund miteinander verbunden sind, das zweite Strukturmaterial eine Vielzahl von zweiten Perforationsöffnungen aufweist und das erste Strukturmaterial keine Perforationsöffnungen aufweist, oder eine Vielzahl von ersten Perforationsöffnungen aufweist, die kleiner sind als die zweiten Perforationsöffnungen.

3. Geomaterialbahn nach einem der vorhergehenden Ansprüche 1-2,
   **dadurch gekennzeichnet, dass**

   - die Geomaterialbahn eine Polymergruppe aufweist, die ein mit einer Isotopenmarkierung versehenes Molekül umfasst, insbesondere eine $^{13}$C oder $^{18}$O-Isotopenmarkierung, und/oder
   - die Geomaterialbahn ein Strukturmaterial umfasst oder aus einem oder mehreren Strukturmaterialien besteht, das/die verstoffwechselbar ist/sind.

**4.** Geomaterialbahn nach einem der vorhergehenden Ansprüche 1-3,

**Dadurch gekennzeichnet, dass** die Geomaterialbahn durch einen ein- oder mehrschichtigen Filtervliesstoff gebildet wird, der aus mindestens zwei unterschiedlichen Strukturmaterialen hergestellt ist, die zu einem Vliesstoff miteinander verbunden sind, wobei

- ein erstes Strukturmaterial unter einer vorbestimmten Intensität eines Einflussparameters an einem Einbauort eine biologische Abbaubarkeit in dem Maße aufweist, dass innerhalb von sechs Monaten im wässrigen Medium ein Gewichtsprozentanteil von mehr als 50%, insbesondere mehr als 75% des Strukturmaterials in Kohlendioxid umgewandelt ist,

wobei die vorbestimmte Intensität des Einflussparameters ausgewählt ist aus:

- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,
- und ein zweites Strukturmaterial mit dem ersten Strukturmaterial zu dem Filtervliesstoff verbunden ist, wobei das zweite Strukturmaterial unter der gleichen vorbestimmten Intensität des Einflussparameters an dem gleichen Einbauort eine biologische Abbaubarkeit in dem Maße aufweist, dass
- in einem Kompostierungstest mit folgenden Parametern:

◦ Proben mit einer Länge von 10cm, einer Breite von 10cm und einer Originalmaterialdicke,
◦

50°C +/- 5°C,

◦ thermophile Bedingungen gemäß ISO 16929,
◦ Aussiebung der Feststoffe nach sechs Monaten in einem Sieb mit 2mm aschenweite (Mesh 8,75)

- bei der Siebung weniger als 50 Trocken-Gew.-% des Ausgangsmaterial im Sieb verbleibt, oder

- in einem marinen Inkubationstest, mit folgenden Parametern:

◦ Proben mit einer Länge von 2cm, einer Breite von 2cm und einer Originalmaterialdicke,
◦

30°C +/- 2°C

◦ aerobe Bedingungen in Meerwasser mit einem Salzgehalt von 3,5 Gew.-% +/- 1Gew.-%,
◦ Aussiebung der Feststoffe nach 4, 8 und 12 Wochen in einem Sieb mit 2mm Maschenweite (Mesh 8,75),

bei der Siebung nach 12 Wochen weniger als 20 Trocken-Gew.-% des Ausgangsmaterial im Sieb verbleibt.

**5.** Verfahren zur ortsabhängigen Bodenstabilisierung mittels einer Geomaterialbahn nach Anspruch 1, mit den Schritten:

Auslegung des Produktes auf die die Dauerhaftigkeit des Geomaterials bestimmenden Einflussparameter am Einbauort, wobei die Einflussparameter ausgewählt sind aus:

- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,

Bestimmen eines oder mehrerer dieser Einflussparameter an einem vom Einbauort beabstandeten Verbringort,

- Einbauen der Geomaterialbahn am Einbauort, wobei die Geomaterialbahn ein Strukturmaterial umfasst, das

◦ unter der Intensität des Einflussparameters am Verbringort eine biologische Abbaubarkeit in dem Maße aufweist, dass innerhalb von sechs Monaten ein Verbringortrestanteil in einem Sieb von 2mm Maschenweite verbleibt, wenn das Material bzw. seine Bestandteile gesiebt werden,
◦ wobei der Verbringortrestanteil kleiner als 80 Gew.-%, vorzugsweise kleiner als 25 Gew.-% oder kleiner als 10 Gew.% des Materials ist,

◦ unter der Intensität des Einflussparameters am Einbauort eine biologische Abbaubarkeit in dem Maße aufweist, dass innerhalb von sechs Monaten ein Einbauortrestanteil des Materials in einem Sieb von 2mm verbleibt, wenn das Material bzw. seine Bestandteile gesiebt werden,

◦ wobei der Einbauortrestanteil größer ist als der Verbringortrestanteil,

wobei vorzugsweise der Einbauort eine Umgebung aufweist, die eine gegenüber dem Verbingort niedrigere Temperatur, Strahlungseinwirkung, Sauerstoff-, Bakterien- und/oder Pilzkonzentration aufweist.

6. Verfahren nach Anspruch 5,
**dadurch gekennzeichnet, dass** der Einbauort am Meeresgrund liegt und die Geomaterialbahn in Meereswasser infolge einer Strömung und/oder Dichteunterschieden aufschwimmt oder verbracht wird.

7. Verfahren nach einem der Ansprüche 5-6,
**dadurch gekennzeichnet, dass** das Strukturmaterial ein Material auf Viscosebasis ist, insbesondere Lyocell.

8. Verwendung einer Geomaterialbahn nach Anspruch 1, die ein Strukturmaterial umfasst, das

- unter einer ersten Intensität eines Einflussparameters an einem Einbauort eine biologische Abbaubarkeit in dem Maße aufweist, dass
- in einem Kompostierungstest mit folgenden Parametern:

◦ Proben mit einer Länge von 10cm, einer Breite von 10cm und einer Originalmaterialdicke,
◦

50°C +/- 5°C,

◦ thermophile Bedingungen gemäß ISO 16929, sofern diese nicht durch spezifische Intensitäten von spezifischen Einflussparametern am Einbauort definiert sind,
◦ Aussiebung der Feststoffe nach sechs Monaten in einem Sieb mit 2mm Maschenweite (Mesh 8,75)

- bei der Siebung mehr als 80 Trocken-Gew.-%, 25 Trocken-Gew.-%, 10 Trocken-Gew.-%des Ausgangsmaterial im Sieb verbleibt, oder dass
- in einem marinen Inkubationstest, mit folgenden Parametern:

◦ Proben mit einer Länge von 2cm, einer Breite von 2cm und einer Originalmaterialdicke,
◦

30°C +/- 2°C ,

◦ Aerobe Bedingungen in Meerwasser mit einem Salzgehalt von 3,5 Gew.-% +/-1Gew.-%, sofern diese nicht durch spezifische Intensitäten von spezifischen Einflussparametern am Einbauort definiert sind,
◦ Aussiebung der Feststoffe nach 4, 8 und 12 Wochen in einem Sieb mit 2mm Maschenweite (Mesh 8,75),

- bei der Siebung nach 12 Wochen mehr als 80 Trocken-Gew.-%, mehr als 25 Trocken-Gew.-%, 10 Trocken-Gew.-% des Ausgangsmaterial im Sieb verbleibt, und
- unter einer zweiten Intensität des Einflussparameters an einem Verbringort eine biologische Abbaubarkeit in dem Maße aufweist, dass innerhalb von sechs Monaten in dem Kompostierungstest bzw. zwölf Wochen in dem marinen Inkubationstest weniger als 80 Gew.-%, insbesondere weniger als 25 Gew.-% oder weniger als 10 Gew.- % der Trockenmasse des ersten Strukturmaterials nach einer Siebung durch ein Sieb mit 2mm Maschenweite im Sieb verbleibt, wobei die Intensität des Einflussparameters ausgewählt ist aus:

- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,
- erwarteten mechanischen Beanspruchungen

in solcher Weise, dass die Geomaterialbahn zu einem Einbauzeitpunkt am Einbauort eingebaut wird und zu einem dem Einbauzeitpunkt folgenden späteren Zeitpunkt an den Verbringort transportiert wird.

9. Verwendung einer Geomaterialbahn nach einem der Ansprüche 1-4 zum Einbau in eine Bodenschicht zum Zwecke der Bodenstabilisierung.

**10.** Verwendung einer Geomaterialbahn nach Anspruch 1, die ein Strukturmaterial umfasst, das

- unter einer vorbestimmten Intensität eines Einflussparameters an einem Einbauort eine biologische Abbaubarkeit in dem Maße aufweist, dass
- in einem Kompostierungstest mit folgenden Parametern:

○ Proben mit einer Länge von 10cm, einer Breite von 10cm und einer Originalmaterialdicke,
○

50°C +/- 5°C,

○ thermophile Bedingungen gemäß ISO 16929,
○ Aussiebung der Feststoffe nach sechs Monaten in einem Sieb mit 2mm Maschenweite (Mesh 8,75)

bei der Siebung weniger als 50 Trocken-Gew.-% des Ausgangsmaterial im Sieb verbleibt, oder
- in einem marinen Inkubationstest, mit folgenden Parametern:

○ Proben mit einer Länge von 2cm, einer Breite von 2cm und einer Originalmaterialdicke,
○

30°C +/- 2°C,

○ Aerobe Bedingungen in Meerwasser mit einem Salzgehalt von 3,5 Gew.-% +/- 1Gew.-%,
○ Aussiebung der Feststoffe nach 4, 8 und 12 Wochen in einem Sieb mit 2mm Maschenweite (Mesh 8,75),

bei der Siebung nach 12 Wochen weniger als 20 Trocken-Gew.-% des Ausgangsmaterial im Sieb verbleibt,

wobei die vorbestimmte Intensität des Einflussparameters ausgewählt ist aus:

- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,
- erwarteten mechanischen Beanspruchungen.

zum Stabilisieren einer Bodenschichtlage im Hochwasserschutz oder Kolkschutz.

**11.** Verwendung nach Anspruch 10,

- **dadurch gekennzeichnet, dass** die Geomaterialbahn zur Herstellung von befüllbaren Behältern verwendet und die Behälter so verwendet werden, dass sie befüllt am Meeresgrund platziert werden und hierdurch einen Kolkschutz an strömungsbelasteten Orten bereitstellt, oder
- die Geomaterialbahn im Ufer- oder Küstenschutz an einem Einbauort mit gelegentlichem Trockenfallen oder einem Einbauort mit gelegentlichem Nasswerden eingebaut wird, wobei die Geomaterialbahn bevorzugt eine geringere Dichte als Wasser aufweist.

**12.** Verwendung nach Anspruch 10,
**dadurch gekennzeichnet, dass** die Geomaterialbahn als Element in Konstruktionen, die der Beinflussung von Luftströmungen dienen, so eingebaut wird, dass insbesondere die Geschwindigkeit der Luftströmung lokal verringert wird zum Zwecke der Ablagerung von Partikeln, die bei nicht verringerter Luftgeschwindigkeit in der Luft schwebend transportiert werden, springen oder rollen.

**Claims**

**1.** Geomaterial web, comprising

- a first organic structural material and a second structural material, different from the first, which is connected to each other with the first structural material to form a planar composite material web extending in two mutually perpendicular directions,
**characterized in that** the first structural material is an organic material and the second structural material is an organic or inorganic material,
- the first structural material has a first biodegradability to the extent that
- In a composting test with the following parameters:

○ Samples with a length of 10 cm, a width of 10 cm and an original material thickness
○

50°C +/- 5°C

○ thermophilic conditions according to ISO 16929,

○ Sieving out the solids after six months in a sieve with a mesh size of 2 mm (mesh 8.75)

less than 80 % by weight, in particular less than 50 % by weight, less than 25 % by weight or less than 10 % by weight of the dry mass of the starting material remains in the sieve during sieving, or

- in a marine incubation test, with the following parameters:

○ Samples with a length of 2 cm, a width of 2 cm and an original material thickness

○

$$30°C +/- 2°C$$

○ aerobic conditions in seawater with a salt content of 3.5 wt.% +/- 1 wt.%,

○ Sieving out the solids after 4, 8 and 12 weeks in a sieve with a mesh size of 2 mm (mesh 8.75)

less than 80 % by weight, in particular less than 50 % by weight, less than 25 % by weight or less than 10 % by weight of the dry mass of the starting material remains in the sieve after 12 weeks, and

the second structural material has a second biodegradability which is different from the first biodegradability, in particular is lower than the first biodegradability

and **in that** the first structural material is arranged in the geomaterial web in such a way that, after partial or complete biodegradation of the first structural material, openings are formed in the geomaterial web passing through the geomaterial web,

2. Geomaterial web according to claim 1, **characterized in that** the first structural material partially or completely penetrates the second structural material, or the first structural material and the second structural material are bonded together as a layered composite, the second structural material has a plurality of second perforation openings and the first structural material has no perforation openings, or has a plurality of first perforation openings which are smaller than the second perforation openings.

3. Geomaterial web according to any of the preceding claims 1-2, **characterized in that**

- the geomaterial web has a polymer group comprising a molecule provided with an isotopic label, in particular a $^{13}$C or $^{18}$O isotopic label, and/or
- the geomaterial web comprises a structural material or consists of one or more structural materials that are metabolizable.

4. Geomaterial web according to any of the preceding claims 1-3,

**characterized in that** the geomaterial web is formed by a single-layer or multi-layer nonwoven filter fabric which is produced from at least two different structural materials which are connected together to form a nonwoven, wherein

- a first structural material exhibits biodegradability under a predetermined intensity of an influencing parameter at an installation site to the extent that a percentage by weight of more than 50%, in particular more than 75%, of the structural material is converted into carbon dioxide in the aqueous medium within six months,

where the predetermined intensity of the influencing parameter is selected from:

- Intensity of a radiation effect of electromagnetic radiation,
- Height of a temperature,
- Concentration of a substance that reacts chemically and/or biochemically with the geomaterial web,
- Concentration of a concentration of bacteria,
- Concentration of fungi,
- and a second structural material is connected to the first structural material to form the nonwoven filter fabric, the second structural material exhibiting biodegradability under the same predetermined intensity of the influence parameter at the same installation site to the extent that

- in a composting test with the following parameters:

○ Samples with a length of 10 cm, a width of 10 cm and an original material thickness

○

$$50°C +/- 5°C$$

○ thermophilic conditions according to ISO 16929,

○ Sieving out the solids after six months in a sieve with an ash width of 2 mm (mesh 8.75)

- less than 50 % by dry weight of the starting material remains in the sieve during sieving, or

- in a marine incubation test, with the following parameters:

  ∘ Samples with a length of 2 cm, a width of 2 cm and an original material thickness
  ∘

  30°C +/- 2°C

  ∘ aerobic conditions in seawater with a salt content of 3.5 wt.% +/- 1 wt.%,
  ∘ Sieving of the solids after 4, 8 and 12 weeks in a sieve with 2 mm mesh size (mesh 8.75),

less than 20 % by dry weight of the starting material remains in the sieve after 12 weeks.

5. Method for site-dependent soil stabilization by means of a geomaterial web according to claim 1, comprising the steps:

  Design of the product for the influencing parameters determining the durability of the geomaterial at the installation site, whereby the influencing parameters are selected from:

    - Intensity of a radiation effect of electromagnetic radiation,
    - Height of a temperature,
    - Concentration of a substance that reacts chemically and/or biochemically with the geomaterial web,
    - Concentration of a concentration of bacteria,
    - Concentration of fungi,

  Determination of one or more of these influencing parameters at a transfer site at a distance from the installation site,

    - Installation of the geomaterial sheet at the installation site, wherein the geomaterial sheet comprises a structural material which

      ∘ shows biodegradability under the intensity of the influence parameter at the transfer site to the extent that a transfer site residual portion remains in a sieve with a mesh size of 2 mm within six months if the material or its components are sieved,
      ∘ wherein the transfer site residual portion of the material is less than 80 wt.%,

preferably less than 25 wt.% or less than 10 wt.% of the material,
      ∘ exhibits biodegradability under the intensity of the influence parameter at the installation site to the extent that within six months an installation site residual portion of the material remains in a sieve of 2 mm when the material or its components are sieved,
      ∘ where the installation site residual portion is greater than the transfer site residual portion,

    where preferably the installation site has an environment with a lower temperature, radiation, oxygen, bacteria and/or fungi concentration than the transfer site.

6. Method according to claim 5, **characterized in that** the installation site is on the seabed and the geomaterial sheet floats or is moved in seawater as a result of a current and/or density differences.

7. The method according to any one of claims 5-6, **characterized in that** the structural material is a viscose-based material, in particular lyocell.

8. Use of a geomaterial sheet according to claim 1, comprising a structural material which

    - exhibits biodegradability under a first intensity of an influencing parameter at an installation site to the extent that
    - in a composting test with the following parameters:

      ∘ Samples with a length of 10 cm, a width of 10 cm and an original material thickness,
      ∘

      50°C +/- 5°C

      ∘ thermophilic conditions according to ISO 16929, unless these are defined by specific intensities of specific influencing parameters at the installation site,
      ∘ Sieving out the solids after six months in a sieve with a mesh size of 2 mm (mesh 8.75)

    - more than 80 % by dry weight, 25 % by dry weight, 10 % by dry weight of the starting material remains in the sieve during sieving, or that
    - in a marine incubation test, with the following parameters:

      ∘ Samples with a length of 2 cm, a width of 2 cm and an original material thickness

°

30°C +/- 2°C ,

° Aerobic conditions in seawater with a salt content of 3.5 wt.% +/- 1 wt.%, unless these are defined by specific intensities of specific influencing parameters at the installation site,

° Sieving of the solids after 4, 8 and 12 weeks in a sieve with 2 mm mesh size (mesh 8.75),

- more than 80 % by dry weight, more than 25 % by dry weight, 10 % by dry weight of the starting material remains in the sieve after 12 weeks, and

- exhibits biodegradability under a second intensity of the influencing parameter at a transfer site to the extent that within six months in the composting test or twelve weeks in the marine incubation test less than 80 % by weight, in particular less than 25 % by weight or less than 10 % by weight of the dry mass of the first structural material remains in the sieve after sieving through a sieve with a mesh size of 2 mm,

where the intensity of the influencing parameter is selected from:

- Intensity of a radiation effect of electromagnetic radiation,
- Height of a temperature,
- Concentration of a substance that reacts chemically and/or biochemically with the geomaterial web,
- Concentration of a concentration of bacteria,
- Concentration of fungi,
- expected mechanical stresses

in such a way that the geomaterial web is installed at the installation site at one time and transferred to the transfer site at a later time following the installation time.

9. Use of a geomaterial sheet according to any of claims 1-4 for installation in a soil layer for the purpose of soil stabilization.

10. Use of a geomaterial web according to claim 1, comprising a structural material which

- exhibits biodegradability under a predetermined intensity of an influencing parameter at an installation site to the extent that

- in a composting test with the following parameters:

- Samples with a length of 10 cm, a width of 10 cm and an original material thickness,

-

50°C +/- 5°C

- thermophilic conditions according to ISO 16929,
- Sieving out the solids after six months in a sieve with a mesh size of 2 mm (mesh 8.75)

less than 50 % by dry weight of the starting material remains in the sieve during sieving, or

- in a marine incubation test, with the following parameters:

- Samples with a length of 2 cm, a width of 2 cm and an original material thickness

-

30°C +/- 2°C

- Aerobic conditions in seawater with a salt content of 3.5 wt.% +/-1 wt.%,
- Sieving of the solids after 4, 8 and 12 weeks in a sieve with 2 mm mesh size (mesh 8.75),

less than 20 % by dry weight of the starting material remains in the sieve after 12 weeks,

where the predetermined intensity of the influencing parameter is selected from:

- Intensity of a radiation effect of electromagnetic radiation,
- Height of a temperature,
- Concentration of a substance that reacts chemically and/or biochemically with the geomaterial web,
- Concentration of a concentration of bacteria,
- Concentration of fungi,
- expected mechanical stresses.

for stabilizing a soil layer in flood protection or scour protection.

11. Use according to claim 10,

- **characterized in that** the geomaterial web is used to make fillable containers and the containers are used so that they are placed filled on the seabed and thereby provide scour protection at locations exposed to currents, or

- the geomaterial sheeting is installed in bank or coastal protection at an installation site with occasional drying or an installation site with occasional wetting, whereby the geomaterial sheeting preferably has a lower density than water.

**12.** Use according to claim 10,
**characterized in that** the geomaterial web is installed as an element in structures which serve to influence air flows in such a way that, in particular, the speed of the air flow is reduced locally for the purpose of depositing particles which are transported suspended in the air, bounce or roll when the air speed is not reduced.

**Revendications**

**1.** Bande de géomatériau, comprenant

- un premier matériau structurel organique et un deuxième matériau structurel, différent du premier, qui est relié au premier matériau structurel pour former une bande de matériau composite plane s'étendant dans deux directions perpendiculaires l'une à l'autre,
**caractérisée en ce que** le premier matériau structurel est un matériau organique et que le deuxième matériau structurel est un matériau organique ou inorganique,

- le premier matériau structurel présente une première biodégradabilité dans la mesure où
- dans un essai de compostage avec les paramètres suivants :

  ∘ échantillons d'une longueur de 10 cm, d'une largeur de 10 cm et d'une épaisseur de matériau d'origine
  ∘

  50°C +/- 5°C

  ∘ conditions thermophiles conformément à la norme ISO 16929,
  ∘ tamisage des matières solides après six mois dans un tamis d'un maillage de 2 mm (maille 8,75)

lors du tamisage, il reste moins que 80 % en poids, en particulier moins que 50 % en poids, moins que 25 % en poids ou moins de 10 % en poids de matière sèche de la matière sèche du matériel de départ dans le tamis, ou
- dans un essai d'incubation en milieu marin, avec les paramètres suivants:

  ∘ échantillons d'une longueur de 2 cm, d'une largeur de 2 cm et d'une épaisseur de matériau d'origine

  ∘

  30°C +/- 2°C

  ∘ dans des conditions aérobies dans de l'eau de mer avec une teneur en sel de 3,5 % en poids +/- 1 % en poids,
  ∘ tamisage des matières solides après 4, 8 et 12 semaines dans un tamis d'un maillage de 2 mm (maille 8,75) lors du tamisage après 12 semaines, il reste moins que 80 % en poids, en particulier moins que 50 % en poids, moins que 25 % en poids ou moins de 10 % en poids de matière sèche de la matière sèche du matériel de départ dans le tamis, et

le deuxième matériau structurel a une deuxième biodégradabilité différente de la première biodégradabilité, en particulier inférieure à la première biodégradabilité,
et **en ce que** le premier matériau structurel est disposé dans la bande de géomatériau de manière telle qu'après biodégradation partielle ou totale du premier matériau structurel dans la bande de géomatériau, des ouvertures pénétrant la bande de géomatériau sont formées,

**2.** Bande de géomatériau selon la revendication 1, **caractérisé en ce que** le premier matériau structurel pénètre partiellement ou totalement le deuxième matériau structurel, ou que le premier matériau structurel et le deuxième matériau structurel sont reliés entre eux sous forme de composite en couches, que le deuxième matériau structurel a une pluralité de deuxièmes ouvertures de perforation et que le premier matériau structurel n'a pas d'ouvertures de perforation, ou qu'il a une pluralité de premières ouvertures de perforation qui sont plus petites que les deuxièmes ouvertures de perforation.

**3.** Bande de géomatériau selon l'une quelconque des revendications précédentes 1 à 2, **caractérisée en ce que**

- la bande de géomatériau comporte un groupe polymère comprenant une molécule munie d'un marquage isotopique, notamment un marquage isotopique $^{13}$C ou $^{18}$O, et/ou
- la bande de géomatériau comprend un matériau structurel ou est constituée d'un ou de plusieurs matériaux structurels métabolisables.

**4.** Bande de géomatériau selon l'une quelconque des revendications précédentes 1 à 3,

**caractérisé en ce que** la bande de géomatériau est formée d'un non-tissé filtrant monocouche ou multicouche fabriqué à partir d'au moins deux matériaux structurels différents qui sont reliés entre eux pour former un non-tissé,

- un premier matériau structurel présente, sous l'effet d'une intensité prédéterminée d'un paramètre d'influence à un emplacement de montage, une biodégradabilité telle qu'en l'espace de six mois, dans un milieu aqueux, plus de 50 % en poids, notamment plus de 75 % en poids, du matériau structurel est transformé en dioxyde de carbone,

l'intensité prédéterminée du paramètre d'influence étant choisie parmi :

- intensité d'un effet de rayonnement électromagnétique,
- niveau d'une température,
- concentration d'une substance qui réagit chimiquement et/ou biochimiquement avec la bande de géomatériaux,
- concentration d'une concentration de bactéries,
- concentration de champignons,

- et un deuxième matériau structurel est relié au premier matériau structurel pour former le non-tissé filtrant, le deuxième matériau structurel présentant, sous la même intensité prédéterminée du paramètre d'influence, au même emplacement de montage, une biodégradabilité telle que
- dans un essai de compostage avec les paramètres suivants :

  ○ échantillons d'une longueur de 10 cm, d'une largeur de 10 cm et d'une épaisseur de matériau d'origine
  ○

  50°C +/- 5°C

  ○ conditions thermophiles conformément à la norme ISO 16929,
  ○ tamisage des matières solides après six mois dans un tamis d'un maillage de 2 mm (maille 8,75)

- il reste moins que 50 % en poids sec de la matière première dans le tamis après le tamisage, ou
- dans un essai d'incubation en milieu marin, avec les paramètres suivants:

  ○ échantillons d'une longueur de 2 cm, d'une largeur de 2 cm et d'une épaisseur de matériau d'origine
  ○

  30°C +/- 2°C

  ○ dans des conditions aérobies dans de l'eau de mer avec une teneur en sel de 3,5 % en poids +/- 1 % en poids,
  ○ tamisage des matières solides après 4, 8 et 12 semaines dans un tamis d'un maillage de 2 mm (maille 8,75)

moins de 20 % en poids sec de la matière première reste dans le tamis après 12 semaines.

5. Procédé de stabilisation du sol en fonction du site au moyen d'une bande de géomatériau selon la revendication 1, comprenant les étapes suivantes :

Conception du produit en fonction des paramètres influençant la durabilité du géomatériau à l'emplacement de montage, les paramètres influençant étant choisis parmi :

- intensité d'un effet de rayonnement électromagnétique,
- niveau d'une température,
- concentration d'une substance qui réagit chimiquement et/ou biochimiquement avec la bande de géomatériaux,
- concentration d'une concentration de bactéries,
- concentration de champignons,

Détermination d'un ou de plusieurs de ces paramètres d'influence à un lieu d'expédition situé à une certaine distance de l'emplacement de montage,

- Installation de la bande de géomatériau à l'emplacement de montage, la bande de géomatériau comprenant un matériau structurel qui

  ○ présente une biodégradabilité sous l'intensité du paramètre d'influence sur le lieu d'expédition dans la mesure où une partie résiduelle du lieu d'expédition reste dans un tamis d'un maillage de 2 mm dans un délai de six mois quand la matière ou ses composants sont tamisés,
  ○ la teneur résiduelle du matériau est inférieure à 80 % en poids, de préférence inférieure à 25 % en poids ou inférieure à 10 % en poids du matériau,
  ○ présente une biodégradabilité sous l'intensité du paramètre d'influence à l'emplacement de montage dans la mesure où, dans un délai de six mois, une partie résiduelle de l'emplacement de montage du matériau reste dans un tamis de 2 mm quand le matériau ou ses composants sont tamisés,
∘ la partie résiduelle de l'emplacement de montage est supérieure à la partie résiduelle du lieu d'expédition,

l'emplacement de montage présentant de préférence un environnement qui présente une température, une exposition aux rayonnements, une concentration en oxygène, en bactéries et/ou en champignons inférieures à celles du lieu de expédition.

6. Procédé selon la revendication 5,
**caractérisé en ce que** l'emplacement de montage se trouve sur le fond de la mer et que la bande de géomatériau flotte ou est déplacée dans l'eau de mer sous l'effet d'un courant et/ou de différences de densité.

7. Procédé selon l'une quelconques des revendications 5 à 6,
**caractérisé en ce que** le matériau structurel est un matériau à base de viscose, en particulier le lyocell.

8. Utilisation d'une bande de géomatériau selon la revendication 1, comprenant un matériau structurel qui

- présente une biodégradabilité sous une première intensité d'un paramètre d'influence à une emplacement de montage, dans la mesure où
- dans un essai de compostage avec les paramètres suivants :

∘ échantillons d'une longueur de 10 cm, d'une largeur de 10 cm et d'une épaisseur de matériau d'origine
∘

50°C +/- 5°C

∘ conditions thermophiles conformément à la norme ISO 16929, pourvu qu'elles ne soient définies par des intensités spécifiques de paramètres d'influence spécifiques à l'emplacement de montage,
∘ tamisage des matières solides après six mois dans un tamis d'un maillage de 2 mm (maille 8,75)

- plus de 80 % en poids sec, 25 % en poids sec, 10 % en poids sec de la matière première restent dans le tamis pendant le tamisage, ou que

- dans un essai d'incubation en milieu marin, avec les paramètres suivants :

∘ échantillons d'une longueur de 2 cm, d'une largeur de 2 cm et d'une épaisseur de matériau d'origine
∘

30°C +/- 2°C

∘ conditions aérobies dans de l'eau de mer avec une teneur en sel de 3,5 % en poids +/- 1 % en poids, pourvu qu'elles soient définies par des intensités spécifiques de paramètres d'influence spécifiques à l'emplacement de montage,
∘ tamisage des matières solides après 4, 8 et 12 semaines dans un tamis d'un maillage de 2 mm (maille 8,75),

- plus de 80 % en poids sec, plus de 25 % en poids sec, 10 % en poids sec de la matière première reste dans le tamis après 12 semaines, et
- présente une biodégradabilité sous une deuxième intensité du paramètre d'influence sur un lieu d'expédition, dans la mesure où, dans un délai de six mois dans l'essai de compostage ou de douze semaines l'essai d'incubation marine, elle est inférieure à 80 % en poids, notamment moins de 25 % en poids ou moins de 10 % en poids de la masse sèche du premier matériau structurel reste dans le tamis après le tamisage à travers un tamis à mailles de 2 mm, l'intensité du paramètre d'influence étant choisie parmi :

- intensité d'un effet de rayonnement électromagnétique,
- niveau d'une température,
- concentration d'une substance qui réagit chimiquement et/ou biochimiquement avec la bande de géomatériau,
- concentration d'une concentration de bactéries,
- concentration de champignons,
- contraintes mécaniques attendues

de telle manière que la bande de géomatériau soit installée à l'emplacement de montage à un moment donné et transportée vers le lieu d'expédition à une date ultérieur à la date d'installation.

9. Utilisation d'une bande de géomatériau selon l'une quelconques des revendications 1 à 4 pour l'installation dans une couche de sol dans le but de stabiliser le sol.

**10.** Utilisation d'une bande de géomatériau selon la revendication 1, comprenant un matériau structurel qui

- présente, sous l'effet d'une intensité prédéterminée d'un paramètre d'influence à l'emplacement de montage, une biodégradabilité telle que
- dans une essai de compostage avec les paramètres suivants :

  ◦ échantillons d'une longueur de 10 cm, d'une largeur de 10 cm et d'une épaisseur de matériau d'origine
  ◦ 50°C +/- 5°C
  ◦ conditions thermophiles conformément à la norme ISO 16929,
  ◦ tamisage des matières solides après six mois dans un tamis d'un maillage de 2 mm (maille 8,75)

moins de 50 % en poids sec de la matière première reste dans le tamis pendant le tamisage, ou
- dans un essai d'incubation en milieu marin, avec les paramètres suivants :

  ◦ échantillons d'une longueur de 2 cm, d'une largeur de 2 cm et d'une épaisseur de matériau d'origine
  ◦

  30°C +/- 2°C

  ◦ conditions aérobies dans de l'eau de mer avec une teneur en sel de 3,5 % en poids +/- 1 % en poids,
  ◦ tamisage des matières solides après 4, 8 et 12 semaines dans un tamis d'un maillage de 2 mm (maille 8,75)

moins de 20 % en poids sec de la matière première reste dans le tamis après 12 semaines, l'intensité prédéterminée du paramètre d'influence étant choisie parmi :

  - intensité d'un effet de rayonnement électromagnétique,
  - niveau d'une température,
  - concentration d'une substance qui réagit chimiquement et/ou biochimiquement avec la bande de géomatériau,
  - concentration d'une concentration de bactéries,
  - concentration de champignons,
  - contraintes mécaniques attendues

pour stabiliser une couche de sol dans le cadre de la protection contre les inondations ou l'affouillement.

**11.** Utilisation selon la revendication 10,

- **caractérisée en ce que** la bande de géomatériau est utilisée pour fabriquer des conteneurs remplissables et que les conteneurs sont utilisés pour être placés remplis au fond de la mer, où ils assurent une protection contre l'affouillement dans les zones exposés aux courants, ou
- la bande de géomatériau est installée pour la protection des berges ou des côtes à une emplacement de montage avec séchage occasionnel ou à une emplacement de montage avec humidité occasionnel, la bande de géomatériau ayant de préférence une densité inférieure à celle de l'eau.

**12.** Utilisation selon la revendication 10, **caractérisée en ce que** la bande de géomatériau est installée comme élément dans des constructions qui servent à influencer les courants d'air, de manière à ce que, notamment, la vitesse du courant d'air soit réduite localement afin de permettre le dépôt des particules qui, si la vitesse de l'air n'est pas réduite, seraient transportées en suspension dans l'air, rebondiraient ou rouleraient.

Fig. 1

Fig 2b

Fig. 2a

Fig. 4

Fig. 3

Fig. 6

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2439342 A1
- DE 29516797 U1
- US 20130344759 A1
- EP 3385426 A1
- US 20090317583 A1
- JP 2007217973 A
- JP 2015200107 A